# EUROPEAN PATENT SPECIFICATION

(11) **EP 4 077 527 B1**
(45) Date of publication and mention of the grant of the patent: **18.09.2024**
(21) Application number: 20845633.5
(22) Date of filing: 09.12.2020
(51) Int. Cl.: C08L 7/00, B60C 1/00, C08K 3/00, C08L 9/00, C08L 9/06

(54) **FUNCTIONALIZED POLYMERS TREAD ADDITIVE FOR IMPROVED WET BRAKING AND ROLLING RESISTANCE IN LOW SILICA SUMMER TIRE**
FUNKTIONALISIERTE POLYMERE ALS REIFENADDITIV FÜR VERBESSERTES NASSBREMSVERHALTEN UND ROLLWIDERSTAND IN SOMMERREIFEN MIT NIEDRIGEM SILICAGEHALT
POLYMÈRES FUNCTIONALISÉS EN TANT QU'ADDITIF POUR PNEUS AYANT UNE FREINAGE SUR SOL MOUILLÉ ET RÉSISTANCE AU ROULEMENT AMÉLIORÉE DANS PNEU D'ETE AYANT UNE TENEUR BASSE EN SILICA

(30) Priority: 17.12.2019 US 201962949116 P
(43) Date of publication of application: 26.10.2022
(73) Proprietor: ExxonMobil Chemical Patents Inc., Baytown, TX 77520-2101 (US)
(72) Inventor: BLOK, Edward J., Huffman, TX 77336 (US); NGUYEN, Paul T.Q., League City, TX 77573 (US); DIAS, Anthony J., Houston, TX 77062 (US); MANN, Jason A., Houston, TX 77008 (US); TRIPATHY, Ranjan, Sugar Land, TX 77479 (US)
(74) Representative: ExxonMobil Chemical Europe LLC
(86) International application number: PCT/US2020/063983
(87) International publication number: WO 2021/126624

(56) References cited:
- EP-A2- 0 661 298
- WO-A1-2019/199835
- WO-A1-2019/199839

## Description

[deleted]

### FIELD OF THE INVENTION

The present invention relates to polymers useful as modifiers for tire treads.

### BACKGROUND OF THE INVENTION

The tire tread compound is an important compound in a tire that dictates wear, traction, and rolling resistance. It is a technical challenge to deliver excellent traction, low rolling resistance while providing good tread wear. The challenge lies in the trade-off between wet traction and rolling resistance/tread wear. Raising the compound glass transition temperature (Tg) provides better wet traction but, at the same time, increases the rolling resistance and tread wear. There is still a need to develop a tread compound additive that can provide good wet traction without increasing rolling resistance and tread wear.

Functionalized SBR (styrene butadiene rubber) is one method to improve this trade-off by improving filler dispersion. NANOPRENE^{™}, sub-micron to micron sized gels from Lanxess with cross-linked butadiene cores and acrylic shells, is another additive used to increase the wet traction without affecting rolling resistance. However, Nanoprene can only deliver limited improvement in wet traction.

Related references include PCT Publications WO2019/199833, WO2019/199835, WO2019/199839 and WO2019/199840. In particular, WO 2019/199835 A1 relates to elastomeric composition including, per 100 parts by weight of rubber (phr): 30 to 50 phr of polybutadiene having a cis- 1,4 linkage content of at least 95%; 40 to 60 phr of styrene/butadiene copolymer; 0 to 20 phr of natural rubber or polyisoprene; 0 to 30 phr of a processing oil; 10 to 30 phr of a hydrocarbon resin; 50 to 75 phr of a filler; a curative agent; an antioxidant; a silane coupling agent;and 5 to 30 phr of a propylene-ethylene-diene terpolymer containing from 2 wt% to 30 wt% of ethylene and/or C₄-C₂₀ α-olefins derived units.

### SUMMARY OF THE INVENTION

Described herein is an elastomeric composition comprising, per 100 parts by weight of rubber (phr): 5 to 30 phr of polybutadiene having a cis-1,4 linkage content of at least 95%; 60 to 100 phr of a styrene/butadiene copolymer; an antioxidant; a curative agent; 5 to 30 phr carbon black; 50 to 80 phr silica; a silane coupling agent and 5 to 30 phr of a polymer, wherein the polymer is selected from the group consisting of ethylene-propylene-diene terpolymer, butyl rubber, poly(isobutylene-co-para-methylstyrene) and poly(isobutylene-co-para-methylstyrene-co-isoprene) terpolymer, wherein the polymer is functionalized with an epoxy; thioacetate; mercaptobenzothiazole amine ionomer; phosphine ionomer or citranellol functional group.

### BRIEF DESCRIPTION OF THE FIGURES

Fig. 1 illustrates a ¹H-NMR spectra of partially epoxidized butyl rubber obtained via reactive mixing.
Fig. 2 illustrates a ¹H-NMR spectra of partially epoxidized ethylene-propylene-diene terpolymer obtained by a reactive mixing process.
Fig. 3 illustrates a ¹H-NMR spectra of thioacetate functionalized poly(isobutylene-co-para-methylstyrene) obtained by a solution mixing process.
Fig. 4 illustrates a ¹H-NMR spectra of thioacetate functionalized butyl rubber obtained by a reactive mixing process.
Fig. 5 illustrates a ¹H-NMR spectrum of mercaptobenzothiazole functionalized poly(isobutylene-co-para-methylstyrene) obtained by a reactive mixing process.
Fig. 6 illustrates a ¹H-NMR spectra of mercaptobenzothiazole functionalized butyl rubber obtained by a reactive mixing process.
Fig. 7 illustrates a ¹H-NMR spectra of poly(isobutylene-co-para-methylstyrene)-amine ionomer obtained by a reactive mixing process.
Fig. 8 illustrates a ¹H-NMR spectra of butyl-amine ionomer obtained by a reactive mixing process.
Fig. 9 illustrates a ¹H-NMR spectra of modified poly(isobutylene-co-para-methylstyrene) containing citranellol obtained by a solution process.
Fig. 10 illustrates a ¹H-NMR spectra of poly(isobutylene-co-para-methylstyrene-co-isoprene) terpolymer 1.
Fig. 11 illustrates a ¹H-NMR spectra of ethylene-propylene-diene terpolymer 1.

### DETAILED DESCRIPTION OF THE INVENTION

This invention is directed to the use of polymer additives based on butyl rubber, ethylene-propylene-diene terpolymer, poly(isobutylene-co-para-methylstyrene) polymer and poly(isobutylene-co-para-methylstyrene-co-isoprene) terpolymer. These polymers, which are functionalized, are useful in tire tread compositions.

It is a technical challenge to deliver excellent traction, low rolling resistance while providing good tread wear. The challenge lies in the trade-off between wet traction and rolling resistance/tread wear. One way to improve rolling resistance and wet braking is to incorporate a series of polyolefin additives based on butyl copolymer rubber, ethylene-propylene-diene terpolymer, poly(isobutylene-co-para-methylstyrene) polymer and poly(isobutylene-co-para-methylstyrene-co-isoprene) terpolymer in tire tread compositions. Development of an immiscible polyolefin (PO) additive, which may be functionalized, increases hysteresis in the wet traction region (0 °C) and lowers hysteresis in the rolling resistance region (60 °C) without changing the overall compound Tg by improving the interface between the polymer domain and the tread matrix. Without wishing to be bound by any theory, the applicants believe that the addition of the PO provides a robust interface between the polymer domain and the tread matrix by concentrating the carbon black and antioxidant in the functionalized PO domain to improve abrasion resistance, cure state and UV stability.

In one embodiment, an elastomeric composition comprises, per 100 parts by weight of rubber (phr): about 5 to about 30 phr of polybutadiene having a cis-1,4 linkage content of at least 95%; about 60 to 100 phr of a styrene/butadiene copolymer; a curative agent; an antioxidant; a curative agent; about 5 to about 30 phr carbon black; about 50 to 80 phr silica; a silane coupling agent and about 5 to about 30 phr of a functionalized polymer, wherein the polymer is selected from the group consisting of ethylene-propylene-diene terpolymer, butyl rubber, poly(isobutylene-co-para-methylstyrene) polymer and poly(isobutylene-co-para-methylstyrene-co-isoprene) terpolymer.

The butyl copolymer rubbers are prepared by polymerizing (i) C4-C7 isoolefins with (ii) C4-C14 conjugated dienes. The butyl copolymer rubbers contain from 85 to 99.5 mol% C4-C7 isoolefins and from 0.5 to 15 mol% C4-C14 conjugated dienes. Preferably, the butyl copolymer rubber is Butyl 365 (ExxonMobil Chemical). In an embodiment, the butyl copolymer rubbers may be halogenated. Preferably, the halogenated butyl copolymer rubber is Exxon^{™} bromobutyl rubber or Exxon^{™} chlorobutyl rubber.

The ethylene-propylene-diene terpolymers are prepared by polymerizing (i) propylene with (ii) at least one of ethylene and C₄-C₂₀ α-olefins and (iii) one or more dienes such as ethylidene norbornene. In an embodiment, the ethylene-propylene-diene terpolymer may be halogenated. In another embodiment, the ethylene-propylene-diene terpolymer is amorphous ethylene-propylene-diene terpolymer.

The poly(isobutylene-co-para-methylstyrene) polymers ("BIMSM") are prepared as described in U.S. Pat. No. 5,162,445. A catalyst solution of ethyl aluminum dichloride in methyl chloride is added to a feed blend of methyl chloride, isobutylene and para-methylstyrene in a reactor. The reactor is quenched by cold methanol, the methyl chloride is flashed off and the BIMSM polymer is washed in methanol. Preferably, the poly(isobutylene-co-para-methylstyrene) polymer is Exxpro^{™} NPX 1602 (ExxonMobil Chemical). In an embodiment, the poly(isobutylene-co-para-methylstyrene) polymer may be halogenated. Preferably, the halogenated poly(isobutylene-co-para-methylstyrene) polymer is a brominated poly(isobutylene-co-para-methylstyrene) polymer such as Exxpro^{™} 3035, 3433, 3563 or 3745. In an embodiment, the poly(isobutylene-co-para-methylstyrene) polymer may be functionalized as in U.S. Pat. No. 5,162,445 or as described herein.

The poly(isobutylene-co-para-methylstyrene-co-isoprene) terpolymers ("IB-IP-PMS") are prepared as described in U.S. Patent No. 6,960,632 or as described herein. Poly(isobutylene-co-para-methylstyrene-co-isoprene) terpolymer is prepared by adding an initiator/co-initiator solution to a mixed para-methyl styrene, isoprene, and isobutylene monomer solution using standard slurry cationic polymerization techniques. In an embodiment, the poly(isobutylene-co-para-methylstyrene-co-isoprene) terpolymer may be halogenated.

The tire tread composition is an important aspect in a tire that dictates wear, traction, and rolling resistance. It is a technical challenge to deliver excellent traction and low rolling resistance while providing good tread wear. The challenge lies in the trade-off between wet traction and rolling resistance/tread wear. Typically, raising the composition's glass transition temperature (Tg) would provide good wet traction but, at the same time, increase the rolling resistance and tread wear. The embodiments described herein, on the other hand, provide a tread compound additive that can deliver superior wet traction without lowering the rolling resistance and tread wear.

Further, the tread composition described herein is suitable for use in summer tires typically used by high-performance vehicles. That is, the mechanical properties of the tread compounds indicate that corresponding tires would have enhanced handling (e.g., greater traction and grip) and improved braking capabilities.

### Butyl copolymer rubber

The term "butyl rubber" or "butyl rubber copolymer" as used in the specification means copolymers of C₄ to C₇ isoolefins and C₄ to C₁₄ conjugated dienes which comprise about 0.5 to about 15 mol% conjugated diene and about 85 to 99.5 mol% isoolefin. Illustrative examples of the isoolefins which may be used in the preparation of butyl rubber are isobutylene, 2-methyl-1-propene, 3-methyl-1-butene, 4-methyl-1-pentene and beta-pinene. Illustrative examples of conjugated dienes which may be used in the preparation of butyl rubber are isoprene, butadiene, 2,3-dimethyl butadiene, piperylene, 2,5-dimethylhexa-2,4-diene, cyclopentadiene, cyclohexadiene and methylcyclopentadiene. The preparation of butyl rubber is described in U.S. Patent No. 2,356,128 and is further described in an article by R. M. Thomas et al. in Ind. & Eng. Chem., vol. 32, pp. 1283 et seq., Oct., 1940. Butyl rubber generally has a viscosity average molecular weight between about 100,000 to about 1,500,000, preferably about 250,000 to about 800,000 and a Wijs Iodine No. (INOPO) of about 0.5 to 50, preferably 1 to 20 (for a description of the INOPO test, see Industrial and Engineering Chemistry, Vol. 17, p. 367, 1945).

The term "butyl rubber" also encompasses functionalized butyl rubber compounds described herein.

The butyl rubber may have a C₄ to C₇ isoolefin(s) amount of from about 85 to about 99.5 mol%, or from about 90 to about 99.5 mol% or from about 95 to about 99.5 mol%, based on the weight of the butyl rubber.

The butyl rubber may have a C₄ to C₁₄ conjugated diene(s) amount of from about 0.5 to about 15 mol%, or from about 0.5 to about 10 mol% or from about 0.5 to about 5 mol%, based on the weight of the butyl rubber.

An example of a butyl rubber is BUTYL 365 or 365S (butyl, isobutylene-isoprene rubber (IIR), available from ExxonMobil Chemical Company). BUTYL 365 or 365S is a copolymer of isobutylene and isoprene with about 2.3 mole% unsaturation. Other examples are Exxon BUTYL 065 or 065S (copolymer of isobutylene and isoprene with about 1.05 mole% unsaturation), Exxon BUTYL 068 (copolymer of isobutylene and isoprene with about 1.15 mole% unsaturation) and Exxon BUTYL 268 or 268S (copolymer of isobutylene and isoprene with about 1.7 mole% unsaturation).

In an embodiment, the butyl copolymer rubber may be halogenated. Preferably, the halogenated butyl copolymer rubber is brominated poly (isobutylene-co-isoprene). Examples of halogenated butyl copolymer rubbers are Exxon^{™} bromobutyl rubber or Exxon^{™} chlorobutyl rubber. An example of a halogenated butyl copolymer is Bromobutyl 2222 (ExxonMobil Chemical). Another example of a halogenated butyl rubber is Exxon SBB 6222 (Exxon Mobil), a brominated star branched butyl rubber.

In one embodiment, the butyl rubber is functionalized with sulfur.

In another embodiment, the butyl rubber is functionalized with sulfur and an activator. In a further embodiment, the activator is zinc oxide or stearic acid. In a further embodiment, the activator is a combination of zinc oxide and stearic acid.

In another embodiment, the butyl rubber is functionalized with sulfur, an activator and a silane coupling agent. In a further embodiment, the silane coupling agent is bis(3-triethoxysilylpropyl)tetrasulphide (TESPT). One form of TESPT is a 50:50 blend of Si69^{®} and N330 carbon black, which is available as X50-S^{®} from Evonik Industries.

The inventive compositions may include the butyl rubber in an amount of from 5 phr to 30 phr, or from 5 phr to 25 phr.

### Ethylene-propylene-diene terpolymer

The "ethylene-propylene-diene terpolymer" as used herein may be any polymer comprising propylene and other comonomers. The term "polymer" refers to any carbon-containing compound having repeat units from one or more different monomers. The term "terpolymer" as used herein refers to a polymer synthesized from three different monomers.

The term "ethylene-propylene-diene terpolymer" also encompasses functionalized ethylene-propylene-diene terpolymer compounds described herein.

Terpolymers, in some embodiments, may be produced (1) by mixing all three monomers at the same time or (2) by sequential introduction of the different comonomers. The mixing of comonomers may be done in one, two, or possible three different reactors in series and/or in parallel. Preferably the ethylene-propylene-diene terpolymer comprises (i) propylene-derived units, (ii) α-olefin-derived units and (iii) diene-derived units. The ethylene-propylene-diene terpolymer may be prepared by polymerizing (i) propylene with (ii) at least one of ethylene and C₄-C₂₀ α-olefins and (iii) one or more dienes.

The comonomers may be linear or branched. Preferred linear comonomers include ethylene or C₄ to C₈ α-olefins, more preferably ethylene, 1-butene, 1-hexene, and 1-octene, even more preferably ethylene or 1-butene. Preferred branched comonomers include 4-methyl-1-pentene, 3-methyl-1-pentene, and 3,5,5-trimethyl-1-hexene. In one or more embodiments, the comonomers may include styrene.

The dienes may be conjugated or non-conjugated. Preferably, the dienes are non-conjugated. Illustrative dienes may include, but are not limited to, 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; vinyl norbornene (VNB); dicyclopendadiene (DCPD); and combinations thereof. Preferably, the diene is ENB or VNB. Preferably, the ethylene-propylene-diene terpolymer comprises an ENB content of from 0.5 wt% to 10 wt% based on the weight of the terpolymer, from 1 wt% to 8 wt%, from 2 wt% to 6 wt%, or from 3 wt% to 5 wt%. More preferably, the ethylene-propylene-diene terpolymer comprises an ENB content of from 0.5 wt% to 5 wt%.

The ethylene-propylene-diene terpolymer may have a propylene amount of from 65 wt*%* to 95 wt*%*, or from 70 wt*%* to 95 wt*%*, or from 75 wt*%* to 95 wt*%*, or from 80 wt*%* to 95 wt%, or from 83 wt% to 95 wt%, or from 84 wt% to 95 wt%, or from 84 wt% to 94 wt%, or from 72 wt% to 95 wt%, or from 80 wt% to 93 wt%, or from 85 wt% to 89 wt%, based on the weight of the polymer. The balance of the ethylene-propylene-diene terpolymer comprises at least one of ethylene and C₄-C₂₀ α-olefin and one or more dienes. The α-olefin may be ethylene, butene, hexane, or octene. When two or more α-olefins are present in the polymer, ethylene and at least one of butene, hexane, or octene are preferred.

Preferably, the ethylene-propylene-diene terpolymer comprises from 2 to 30 wt% of C₂ and/or C₄-C₂₀ α-olefins based the weight of the ethylene-propylene-diene terpolymer. When two or more of ethylene and C₄-C₂₀ α-olefins are present the combined amounts of these olefins in the polymer is preferably at least 2 wt% and falling within the ranges described herein. Other preferred ranges of the amount of ethylene and/or one or more α-olefins include from 2 wt% to 15 wt%, or from 5 wt% to 15 wt%, or from 8 wt% to 15 wt%, or from 8 to 12 wt%, based on the weight of the ethylene-propylene-diene terpolymer.

Preferably, the ethylene-propylene-diene terpolymer comprises an ethylene content of from 5 wt% to 25 wt% based on the weight of the terpolymer, or from 8 wt% to 12 wt%.

Preferably, the ethylene-propylene-diene terpolymer comprises a diene content of from 1 wt% to 16 wt% based on the weight of the terpolymer, or from 1 wt% to 12 wt%, or 2 wt% to 6 wt%, or from 2 wt% to 6 wt%.

In one embodiment, the ethylene-propylene-diene terpolymer is halogenated. The ethylene-propylene-diene terpolymer may be halogenated by methods known in the art or by methods described in U.S. Patent No. 4,051,083.

In one embodiment, the synthesis of the ethylene-propylene-diene terpolymer utilizes a bis((4-triethylsilyl)phenyl)methylene(cyclopentadienyl)(2,7-di-tert-butyl-fluoren-9-yl) hafnium dimethyl catalyst precursor. However, other metallocene precursors with good diene incorporation and MW capabilities could also be used. The synthesis of the ethylene-propylene-diene terpolymer also utilizes a dimethylanilinium tetrakis(pentafluorophenyl)borate activator but dimethylanilinium-tetrakis(heptafluoronaphthyl)borate and other non-coordinating anion type activators or MAO could also be used.

In a reactor, a copolymer material is produced in the presence of ethylene, propylene, ethylidene norbornene, and a catalyst comprising the reaction product of N,N-dimethylanilinium tetrakis(pentafluorophenyl)borate and [cyclopentadienyl(2,7-di-t-butylfluorenyl)di-p-triethylsilanephenylmethane] hafnium dimethyl. The copolymer solution emerging from the reactor is quenched and then devolatilized using conventionally known devolatilization methods, such as flashing or liquid phase separation, first by removing the bulk of the isohexane to provide a concentrated solution, and then by stripping the remainder of the solvent in anhydrous conditions using a devolatilizer so as to end up with a molten polymer composition containing less than 0.5 wt% of solvent and other volatiles. The molten polymer composition was advanced by a screw to a pelletizer from which the ethylene-propylene-diene terpolymer composition pellets are submerged in water and cooled until solid.

The ethylene-propylene-diene terpolymer may have a melt flow rate (MFR, 2.16 kg weight at 230°C), equal to or greater than 0.1 g/10min as measured according to the ASTM D-1238-13. Preferably, the MFR (2.16 kg at 230°C) is from 0.5 g/lOmin to 200 g/lOmin, or from 0.5 g/lOmin to 100 g/lOmin, or from 0.5 g/lOmin to 30 g/10min, or from 0.5 g/lOmin to 10 g/lOmin, or from 0.5 g/lOmin to 5 g/lOmin, or from 0.5 g/10min to 2 g/lOmin, or from 0.1 g/lOmin to 15 g/lOmin.

The ethylene-propylene-diene terpolymer may have a heat of fusion (H_{f}) determined by the DSC procedure described herein, which is greater than or equal to 0 Joules per gram (J/g), and is equal to or less than 80 J/g, or equal to or less than 75 J/g, or equal to or less than 70 J/g, or equal to or less than 60 J/g, or equal to or less than 50 J/g, or equal to or less than 35 J/g. Preferably, the H_{f} is 0 J/g.

The crystallinity of the ethylene-propylene-diene terpolymer may be expressed in terms of percentage of crystallinity (i.e., % crystallinity), as determined according to the DSC procedure described herein. The ethylene-propylene-diene terpolymer may have a % crystallinity of from 0% to 40%. Preferably, the %crystallinity is 0%. The ethylene-propylene-diene terpolymer preferably may have a single broad melting transition. However, the ethylene-propylene-diene terpolymer may show secondary melting peaks adjacent to the principal peak, but for purposes herein, such secondary melting peaks are considered together as a single melting point, with the highest of these peaks (relative to baseline as described herein) being considered as the melting point of the ethylene-propylene-diene terpolymer.

The Differential Scanning Calorimetry (DSC) procedure may be used to determine heat of fusion and melting temperature of the ethylene-propylene-diene terpolymer. The method is as follows: approximately 6 mg of material placed in microliter aluminum sample pan. The sample is placed in a Differential Scanning Calorimeter (Perkin Elmer Pyris 1 Thermal Analysis System) and is cooled to -80°C. The sample is heated at 10°C/min to attain a final temperature of 120°C. The sample is cycled twice. The thermal output, recorded as the area under the melting peak of the sample, is a measure of the heat of fusion and may be expressed in Joules per gram of polymer and is automatically calculated by the Perkin Elmer System. The melting point is recorded as the temperature of the greatest heat absorption within the range of melting of the sample relative to a baseline measurement for the increasing heat capacity of the polymer as a function of temperature.

The ethylene-propylene-diene terpolymer may be a blend of discrete random ethylene-propylene-diene terpolymers as long as the polymer blend has the properties of the ethylene-propylene-diene terpolymer as described herein. The number of ethylene-propylene-diene terpolymers may be three or less, or two or less. In one or more embodiments, the ethylene-propylene-diene terpolymer may include a blend of two ethylene-propylene-diene terpolymers differing in the olefin content, the diene content, or the both.

In one embodiment, the ethylene-propylene-diene terpolymer is functionalized with sulfur.

In another embodiment, the ethylene-propylene-diene terpolymer is functionalized with sulfur and an activator. In a further embodiment, the activator is zinc oxide or stearic acid. In a further embodiment, the activator is a combination of zinc oxide and stearic acid.

In another embodiment, the ethylene-propylene-diene terpolymer is functionalized with sulfur, an activator and a silane coupling agent. In a further embodiment, the silane coupling agent is bis(3-triethoxysilylpropyl)tetrasulphide (TESPT).

The inventive compositions may include the ethylene-propylene-diene terpolymer in an amount of from 5 phr to 30 phr, or from 5 phr to 25 phr, or from 10 phr to 20 phr.

### Poly(isobutylene-co-para-methylstyrene)

The term "poly(isobutylene-co-para-methylstyrene)" as used in the specification means a co-polymer of isobutylene and para-methylstyrene.

The term "poly(isobutylene-co-para-methylstyrene)" also encompasses functionalized poly(isobutylene-co-para-methylstyrene) compounds described herein.

Preferably, the poly(isobutylene-co-para-methylstyrene) polymer is Exxpro^{™} NPX 1602 (ExxonMobil Chemical). In a further embodiment, the poly(isobutylene-co-para-methylstyrene) polymer is halogenated. Brominated poly(isobutylene-co-para-methylstyrene) polymer may be obtained, for example, as Exxpro 3035, 3433, 3565 or 3745, a trademark of the ExxonMobil Chemical Company. Exxpro 3035, 3433, 3565 and 3745 are brominated copolymers of isobutylene and paramethylstyrene containing about 0.47, 0.75, 0.85 and 1.2 mol% benzylic bromine, respectively.

In one embodiment, the poly(isobutylene-co-para-methylstyrene) is functionalized with sulfur.

In another embodiment, the poly(isobutylene-co-para-methylstyrene) is functionalized with sulfur and an activator. In a further embodiment, the activator is zinc oxide or stearic acid. In a further embodiment, the activator is a combination of zinc oxide and stearic acid.

In another embodiment, the poly(isobutylene-co-para-methylstyrene) is functionalized with sulfur, an activator and a silane coupling agent. In a further embodiment, the silane coupling agent is bis(3-triethoxysilylpropyl)tetrasulphide (TESPT).

The inventive compositions may include the poly(isobutylene-co-para-methylstyrene) polymer in an amount of from 5 phr to 30 phr, or from 5 phr to 25 phr, or from 10 phr to 20 phr.

### Poly(isobutylene-co-para-methylstyrene-co-isoprene) terpolymer

The term "poly(isobutylene-co-para-methylstyrene-co-isoprene) terpolymer" as used in the specification means a terpolymer comprising isobutylene, para-methylstyrene and isoprene polymers.

The term "poly(isobutylene-co-para-methylstyrene-co-isoprene) terpolymer" also encompasses functionalized poly(isobutylene-co-para-methylstyrene-co-isoprene) terpolymer compounds described herein.

In one embodiment, the poly(isobutylene-co-para-methylstyrene-co-isoprene) terpolymer contains from 4-8 mol% p-methylstyrene, 0.2-2 mol% isoprene and 90-95 mol% isobutylene based on the terpolymer.

In one embodiment, the poly(isobutylene-co-para-methylstyrene-co-isoprene) terpolymer is functionalized with sulfur.

In another embodiment, the poly(isobutylene-co-para-methylstyrene-co-isoprene) terpolymer is functionalized with sulfur and an activator. In a further embodiment, the activator is zinc oxide or stearic acid. In a further embodiment, the activator is a combination of zinc oxide and stearic acid.

In another embodiment, the poly(isobutylene-co-para-methylstyrene-co-isoprene) terpolymer is functionalized with sulfur, an activator and a silane coupling agent. In a further embodiment, the silane coupling agent is bis(3-triethoxysilylpropyl)tetrasulphide (TESPT).

The inventive compositions may include the poly(isobutylene-co-para-methylstyrene-co-isoprene) terpolymer in an amount of from 5 phr to 30 phr, or from 5 phr to 25 phr, or from 10 phr to 20 phr.

### Functionalized Polymer

The term "functionalized polymer" as used in the specification means an olefin polymer which has a functional group, such as an epoxy, thioacetate, mercaptothiazole, amine ionomer, phosphine ionomer or citranellol functional group. Functionalization of a polymer can be implemented as described herein or as known in the art.

The functionalized polymer has an epoxy, thioacetate, mercaptobenzothiazole, amine ionomer, phosphine ionomer or citranellol functional group.

In a further embodiment, the functionalized polymer has an epoxy functional group. Functionalized polymers with an epoxy functional group can be prepared by adding 3-chloroperbenzoic acid to a polyolefin polymer via a reactive mixing process or by the method described herein. In addition to 3-chloroperbenzoic acid, other oxidizing agents may be hydrogen peroxide or hypochloride in t-butanol. Preferably, the polyolefin polymer is a ethylene-propylene-diene terpolymer, butyl rubber, poly(isobutylene-co-para-methylstyrene) or a poly(isobutylene-co-para-methylstyrene-co-isoprene) terpolymer. In a further embodiment, the epoxy functionalized polymer is epoxidized butyl rubber or epoxidized ethylene-propylene-diene terpolymer. In a further embodiment, the epoxy functionalized polymer is partially epoxidized.

In a further embodiment, the functionalized polymer has a thioacetate functional group. Functionalized polymers with a thioacetate functional group can be prepared by nucleophilic substitution of a polyolefin polymer with potassium thioacetate by a solution or a reactive mixing process. Preferably, the polyolefin polymer is a ethylene-propylene-diene terpolymer, butyl rubber, poly(isobutylene-co-para-methylstyrene) or a poly(isobutylene-co-para-methylstyrene-co-isoprene) terpolymer. In a further embodiment, the thioacetate functionalized polymer is thioacetate functionalized poly(isobutylene-co-para-methylstyrene) or thioacetate functionalized butyl rubber.

In a further embodiment, the functionalized polymer has a mercaptobenzothiazole functional group. Functionalized polymers with a mercaptobenzothiazole functional group can be prepared by reacting tetrabutyl ammonium bromide (TBAB) and sodium mercaptothiazole with a polyolefin polymer by a reactive mixing process. Preferably, the polyolefin polymer is a ethylene-propylene-diene terpolymer, butyl rubber, poly(isobutylene-co-para-methylstyrene) or a poly(isobutylene-co-para-methylstyrene-co-isoprene) terpolymer. In a further embodiment, the mercaptobenzothiazole functionalized polymer is mercaptobenzothiazole functionalized poly(isobutylene-co-para-methylstyrene) or mercaptobenzothiazole functionalized butyl rubber.

In a further embodiment, the functionalized polymer has an amine ionomer functional group. Functionalized polymers with an amine ionomer functional group can be prepared by reacting dimethylsoyaalkylamine with a polyolefin polymer by a reactive mixing process or by the method described herein. Preferably, the polyolefin polymer is a ethylene-propylene-diene terpolymer, butyl rubber, poly(isobutylene-co-para-methylstyrene) or a poly(isobutylene-co-para-methylstyrene-co-isoprene) terpolymer. In a further embodiment, the amine ionomer functionalized polymer is partially functionalized. In a further embodiment, the amine ionomer functionalized polymer is modified BIMSM-amine ionomer or modified butyl-amine ionomer.

In a further embodiment, the functionalized polymer has a phosphine ionomer functional group. Functionalized polymers with a phosphine ionomer functional group are prepared by reacting diphenyldiphosphino styrene with a polyolefin polymer by a reactive mixing process. Preferably, the polyolefin polymer is a ethylene-propylene-diene terpolymer, butyl rubber, poly(isobutylene-co-para-methylstyrene) or a poly(isobutylene-co-para-methylstyrene-co-isoprene) terpolymer. In a further embodiment, the phosphine ionomer functionalized polymer is partially functionalized. In a further embodiment, the phosphine ionomer functionalized polymer is modified BIMSM-phosphine ionomer or modified butylphosphine ionomer.

In a further embodiment, the functionalized polymer has a citranellol functional group. Functionalized polymers with a citranellol functional group can be prepared by nucleophilic substitution of a polyolefin polymer with citronellol in a catalyst slurry/sodium alkoxide of sodium hydride by a solution process. Preferably, the polyolefin polymer is a ethylene-propylene-diene terpolymer, butyl rubber, poly(isobutylene-co-para-methylstyrene) or a poly(isobutylene-co-para-methylstyrene-co-isoprene) terpolymer. In a further embodiment, the citranellol functionalized polymer is modified poly(isobutylene-co-para-methylstyrene) containing citranellol side chain substituents.

In a further embodiment, when the polymer is ethylene-propylene-diene terpolymer or butyl rubber, the functionalized polymer has an epoxy, thioacetate, mercapbenzotothiazole, amine ionomer or phosphine ionomer functional group.

In a further embodiment, when the polymer is poly(isobutylene-co-para-methylstyrene) or a poly(isobutylene-co-para-methylstyrene-co-isoprene) terpolymer, the functionalized polymer has a thioacetate, mercaptobenzothiazole, amine ionomer, phosphine ionomer or citranellol functional group.

In a further embodiment, the polymer selected from the group consisting of ethylene-propylene-diene terpolymer, butyl rubber, poly(isobutylene-co-para-methylstyrene) and poly(isobutylene-co-para-methylstyrene-co-isoprene) terpolymer may be functionalized with sulfur and a sulfur donor.

### Elastomers

The inventive tire tread compositions also comprise an elastomer. Generally the range of the elastomer is from 5 to 75% by weight of the tire tread composition. Suitable elastomers include, for example, diene elastomers.

"Diene elastomer" is understood to mean, in known manner, an elastomer resulting at least in part (homopolymer or copolymer) from diene monomers (monomers bearing two double carbon-carbon bonds, whether conjugated or not).

A diene elastomer can be "highly unsaturated," resulting from conjugated diene monomers, which have a greater than 50% molar content of units.

According to one aspect, each diene elastomer having a Tg from -75°C to 0°C is selected from the group consisting of styrene butadiene copolymers, natural polyisoprenes, synthetic polyisoprenes having a cis-1,4 linkage content greater than 95%, styrene/butadiene/isoprene terpolymers and a mixture of these elastomers, and each diene elastomer having a Tg from -110°C to -75°C, preferably from -100°C to -80°C, is selected from the group consisting of polybutadienes having a cis-1,4 linkage content greater than 90% and isoprene/butadiene copolymers comprising butadiene units in an amount equal to or greater than 50*%*.

In one embodiment, the elastomeric composition comprises a diene elastomer is about 5 to about 30 phr of polybutadiene having a cis-1,4 linkage content of at least 95%. In another embodiment, the elastomeric composition comprises a diene elastomer in about 10 to about 25 phr of polybutadiene having a cis-1,4 linkage content of at least 95%.

In another aspect, each diene elastomer having a Tg from -75°C to 0°C is selected from the group consisting of natural polyisoprenes and synthetic polyisoprenes having a cis-1,4 linkage content greater than 95%, and each diene elastomer having a Tg from -110°C to - 75°C is a polybutadiene having a cis-1,4 linkage content greater than 90%, or greater than 95%.

In one aspect, the composition comprises a blend of at least one of the polybutadienes having a cis-1,4 linkage content greater than 90% with at least one of the natural or synthetic polyisoprenes (having a cis-1,4 linkage content greater than 95%). An example of a polybutadiene with a cis-1,4 linkage content is BUDENE^{®} 1280 available from Goodyear Chemical.

In another aspect, the composition comprises a blend of at least one of the polybutadienes having a cis-1,4 linkage content greater than 90% with at least one of the terpolymers of styrene, isoprene and butadiene.

In another aspect, the composition comprises a blend of a polybutadiene and a styrene-butadiene rubber component. In one embodiment, an elastomeric composition comprises, per 100 parts by weight of rubber (phr), about 60 to 100 phr of a styrene/butadiene copolymer. In another embodiment, an elastomeric composition comprises, per 100 parts by weight of rubber (phr), about 65 to 90 phr of a styrene/butadiene copolymer.

These diene elastomers can be classified into two categories: "essentially unsaturated" or "essentially saturated". The term "essentially unsaturated" is understood to mean generally a diene elastomer resulting at least in part from conjugated diene monomers having a level of units of diene origin (conjugated dienes) which is greater than 15% (mol %); thus it is that diene elastomers such as butyl rubbers or copolymers of dienes and of alpha-olefins of EPDM type do not come within the preceding definition and can in particular be described as "essentially saturated" diene elastomers (low or very low level of units of diene origin, always less than 15%). In the category of "essentially unsaturated" diene elastomers, the term "highly unsaturated" diene elastomer is understood to mean in particular a diene elastomer having a level of units of diene origin (conjugated dienes) which is greater than 50%.

Given these definitions, the term diene elastomer capable of being used herein is understood more particularly to mean: (a) any homopolymer obtained by polymerization of a conjugated diene monomer having from 4 to 12 carbon atoms; (b) any copolymer obtained by copolymerization of one or more conjugated dienes with one another or with one or more vinylaromatic compounds having from 8 to 20 carbon atoms; (c) a ternary copolymer obtained by copolymerization of ethylene and of an alpha-olefin having 3 to 6 carbon atoms with a non-conjugated diene monomer having from 6 to 12 carbon atoms, such as, for example, the elastomers obtained from ethylene and propylene with a non-conjugated diene monomer of the abovementioned type, such as, in particular, 1,4-hexadiene, ethylidenenorbornene or dicyclopentadiene; (d) a copolymer of isobutene and of isoprene (butyl rubber) and also the halogenated versions, in particular chlorinated or brominated versions, of this type of copolymer.

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1,3-butadiene or 2-methyl-3-isopropyl-1,3-butadiene, an aryl-1,3-butadiene, 1,3-pentadiene or 2,4-hexadiene. The following, for example, are suitable as vinylaromatic compounds: styrene, ortho-, meta- or para-methylstyrene, the "vinyltoluene" commercial mixture, para-(tert-butyl)styrene, methoxystyrenes, chlorostyrenes, vinylmesitylene, divinylbenzene or vinylnaphthalene.

The copolymers can comprise from 99% to 20% by weight of diene units and from 1% to 80% by weight of vinylaromatic units. The elastomers can have any microstructure which depends on the polymerization conditions used, in particular on the presence or absence of a modifying and/or randomizing agent and on the amounts of modifying and/or randomizing agent employed. The elastomers can, for example, be block, random, sequential or microsequential elastomers and can be prepared in dispersion or in solution; they can be coupled and/or star-branched or also functionalized with a coupling and/or star-branching or functionalization agent. Mention may be made, for coupling to carbon black, for example, of functional groups comprising a C--Sn bond or aminated functional groups, such as benzophenone, for example; mention may be made, for coupling to a reinforcing inorganic filler, such as silica, of, for example, silanol or polysiloxane functional groups having a silanol ends, alkoxysilane groups, carboxyl groups, or polyether groups.

The following are suitable: polybutadienes, in particular those having a content (molar %) of 1,2-units of from 4% to 80% or those having a content (molar %) of cis-1,4-units of greater than 80%, polyisoprenes, butadiene/styrene copolymers, a styrene content of from 5% to 60% by weight and more particularly from 20% to 50%, a content (molar %) of 1,2-bonds of the butadiene part of from 4*%* to 75*%* and a content (molar *%*) of trans-1,4-bonds of from 10% to 80%, butadiene/isoprene copolymers, in particular those having an isoprene content of from 5% to 90% by weight, or isoprene/styrene copolymers, in particular those having a styrene content of from 5% to 50% by weight. In the case of butadiene/styrene/isoprene copolymers, those having a styrene content of from 5% to 50% by weight and more particularly of from 10% to 40%, an isoprene content of from 15% to 60% by weight and more particularly from 20% to 50%, a butadiene content of from 5% to 50% by weight and more particularly of from 20% to 40%, a content (molar %) of 1,2-units of the butadiene part of from 4% to 85%, a content (molar *%*) of trans-1,4-units of the butadiene part of from 6% to 80%, a content (molar %) of 1,2- plus 3,4-units of the isoprene part of from 5% to 70% and a content (molar %) of trans-1,4-units of the isoprene part of from 10% to 50%, and more generally any butadiene/styrene/isoprene copolymer.

The diene elastomer is chosen from the group of the highly unsaturated diene elastomers consisting of polybutadienes (abbreviated to "BR"), synthetic polyisoprenes (IR), natural rubber (NR), butadiene copolymers, isoprene copolymers and the mixtures of these elastomers. Such copolymers are more preferably chosen from the group consisting of butadiene/styrene copolymers (SBR), isoprene/butadiene copolymers (BIR), isoprene/styrene copolymers (SIR) and isoprene/butadiene/styrene copolymers (SBIR). An exemplary SBR is S-SBR with 21.1% styrene, 62.1% vinyl content, commercially available as SPRINTAN^{®} SLR-4602 from Styron. Another SBR is S-SBR with 21*%* bound styrene and 67*%* vinyl content, commercially available as NIPOL^{®} NS 116R from Zeon Corp.

According to a specific embodiment, the diene elastomer is predominantly (i.e., for more than 50 wt%) an SBR, whether an SBR prepared in emulsion ("ESBR") or an SBR prepared in solution ("SSBR"), or an SBR/BR, SBR/NR (or SBR/IR), BR/NR (or BR/IR) or also SBR/BR/NR (or SBR/BR/IR) blend (mixture). In the case of an SBR (ESBR or SSBR) elastomer, use is made in particular of an SBR having a moderate styrene content, for example of from 20% to 35% by weight, or a high styrene content, for example from 35 to 45%, a content of vinyl bonds of the butadiene part of from 15% to 70%, a content (molar %) of trans-1,4-bonds of from 15% to 75%, such an SBR can advantageously be used as a mixture with a BR preferably having more than 90% (molar %) of cis-1,4-bonds.

The term "isoprene elastomer" is understood to mean, in a known way, an isoprene homopolymer or copolymer, in other words a diene elastomer chosen from the group consisting of natural rubber (NR), synthetic polyisoprenes (IR), the various copolymers of isoprene and the mixtures of these elastomers. Mention will in particular be made, among isoprene copolymers, of isobutene/isoprene copolymers (butyl rubber IM), isoprene/styrene copolymers (SIR), isoprene/butadiene copolymers (BIR) or isoprene/butadiene/styrene copolymers (SBIR). This isoprene elastomer is preferably natural rubber or a synthetic cis-1,4-polyisoprene; use is preferably made, among these synthetic polyisoprenes, of the polyisoprenes having a level (molar %) of cis-1,4-bonds of greater than 90%, more preferably still of greater than 98%.

According to still another aspect, the rubber composition comprises a blend of a (one or more) "high Tg" diene elastomer exhibiting a Tg of from -70°C to 0°C and of a (one or more) "low Tg" diene elastomer exhibiting a Tg of from -110°C to -80°C, more preferably from -100°C to -90°C. The high Tg elastomer is preferably chosen from the group consisting of S-SBRs, E-SBRs, natural rubber, synthetic polyisoprenes (exhibiting a level (molar %) of cis-1,4-structures preferably of greater than 95%), BIRs, SIRs, SBIRs and the mixtures of these elastomers. The low Tg elastomer preferably comprises butadiene units according to a level (molar %) at least equal to 70%; it preferably consists of a polybutadiene (BR) exhibiting a level (molar %) of cis-1,4-structures of greater than 90%.

One example of a natural rubber is SVR 3 CV60 available from Standard Vietnamese Rubber CV 60. Another example of a natural rubber is SIR 10 (Standard Indonesian Rubber).

According to another embodiment of the invention, the diene elastomer of the composition according to the invention comprises a blend of a butadiene rubber exhibiting a level (molar %) of cis-1,4-structures of greater than 90% with one or more S-SBRs or E-SBRs.

The compositions described herein can comprise a single diene elastomer or a mixture of several diene elastomers, it being possible for the diene elastomer or elastomers to be used in combination with any type of synthetic elastomer other than a diene elastomer, indeed even with polymers other than elastomers, for example thermoplastic polymers.

Although any styrenic copolymer is useful, those most desirable in the tire compositions are styrene-butadiene copolymer "rubbers." Such rubbers preferably have from 10 or 15 or 20 wt% to 30 or 25 or 40 wt% styrene derived units, by weight of the block copolymer, and within the range of from 30 or 40 or 45 wt% to 55 or 60 or 65 wt% vinyl groups.

Useful tire tread compositions can comprise, per 100 parts by weight of rubber (phr), about 5 to about 30 phr of polybutadiene having a cis-1,4 linkage content of at least 95%; about 60 to 100 phr of a styrene/butadiene copolymer; an antioxidant; a curative agent; about 5 to about 30 phr carbon black; about 50 to 80 phr silica; a silane coupling agent and about 5 to about 30 phr of a polymer selected from the group consisting of ethylene-propylene-diene terpolymer, butyl rubber, poly(isobutylene-co-para-methylstyrene) and poly(isobutylene-co-para-methylstyrene-co-isoprene) terpolymer.

### Inorganic Fillers

The term "filler" as used herein refers to any material that is used to reinforce or modify physical properties, impart certain processing properties, or reduce cost of an elastomeric composition.

Examples of preferred filler include, but are not limited to, calcium carbonate, clay, mica, silica, silicates, talc, titanium dioxide, alumina, zinc oxide, starch, wood flour, carbon black, or mixtures thereof. The fillers may be any size and range, for example in the tire industry, from 0.0001 µm to 100 µm. Preferably, zinc oxide is in naphthenic oil such as AKRO-ZINC^{®} BAR 85 from Akrochem Corp.

As used herein, the term "silica" is meant to refer to any type or particle size silica or another silicic acid derivative, or silicic acid, processed by solution, pyrogenic, or the like methods, including untreated, precipitated silica, crystalline silica, colloidal silica, aluminum or calcium silicates, fumed silica, and the like. Precipitated silica can be conventional silica, semi-highly dispersible silica, or highly dispersible silica. A preferred filler is commercially available by Rhodia Company under the trade name ZEOSIL^{™} Z1165.

In one embodiment, the elastomeric composition comprises, per 100 parts by weight of rubber (phr), about 50 to 80 phr silica. In another embodiment, the elastomeric composition comprises, per 100 parts by weight of rubber (phr), about 60 to 70 phr silica. In another embodiment, the elastomeric composition comprises, per 100 parts by weight of rubber (phr), about 65 to 67 phr silica.

Use may be made of any type of reinforcing filler known for its capabilities of reinforcing a rubber composition which can be used for the manufacture of tires, for example an organic filler, such as carbon black, a reinforcing inorganic filler, such as silica, or a blend of these two types of filler, in particular a blend of carbon black and silica.

All carbon blacks, in particular blacks of the HAF, ISAF or SAF type, conventionally used in tires ("tire-grade" blacks) are suitable as carbon blacks. Mention will more particularly be made, among the latter, of the reinforcing carbon blacks of the 100, 200 or 300 series (ASTM grades), such as, for example, the N115, N134, N234, N326, N330, N339, N347 or N375 blacks, or also, depending on the applications targeted, the blacks of higher series (for example, N660, N683 or N772). The carbon blacks might, for example, be already incorporated in the isoprene elastomer in the form of a masterbatch (see, for example, International Applications WO 97/36724 or WO 99/16600). Preferably the carbon black is Vulcan^{®}3 N330 from Cabot Corp.

The term "reinforcing inorganic filler" should be understood, in the present patent application, by definition, as meaning any inorganic or mineral filler, whatever its color and its origin (natural or synthetic), also known as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (--OH) groups at its surface.

The physical state under which the reinforcing inorganic filler is provided is not important, whether it is in the form of a powder, of microbeads, of granules, of beads or any other appropriate densified form. Of course, the term reinforcing inorganic filler is also understood to mean mixtures of different reinforcing inorganic fillers, in particular of highly dispersible siliceous and/or aluminous fillers as described below.

Mineral fillers of the siliceous type, in particular silica (SiO₂), or of the aluminous type, in particular alumina (Al₂O₃), are suitable in particular as reinforcing inorganic fillers. The silica used can be any reinforcing silica known to a person skilled in the art, in particular any precipitated or pyrogenic silica exhibiting a BET surface and a CTAB specific surface both of less than 450 m²/g, preferably from 30 to 400 m²/g. Mention will be made, as highly dispersible ("HDS") precipitated silicas, for example, of the ULTRASIL^{™} 7000 and ULTRASIL^{™} 7005 silicas from Degussa, the ZEOSIL^{™} 1165 MP, C5 MP and 1115 MP silicas from Rhodia, the HI-SIL^{™} EZ150G silica from PPG, the Zeopol 8715, 8745 and 8755 silicas from Huber or silicas with a high specific surface.

In one embodiment, the silica is alone or a combination of silica compounds. In another embodiment, the silica is not a combination of silica compounds. In another embodiment, when the silica a combination of silica compounds, one of the silica compounds has a BET surface of from 110 to 175 m²/g.

Mention may also be made, as other examples of inorganic filler being capable of being used, of reinforcing aluminum (oxide), hydroxides, titanium oxides or silicon carbides (see, for example, International Application No. WO 02/053634 or U.S. Publication No. 2004/0030017).

In one embodiment, the inorganic filler is not magnesium sulphate.

When the compositions of the invention are intended for tire treads with a low rolling resistance, the reinforcing inorganic filler is silica, preferably with a BET surface of from 45 to 400 m²/g, more preferably of from 60 to 300 m²/g. In one embodiment, the silica has a BET surface of from 110 to 175 m²/g.

In one embodiment, the level of total reinforcing filler (carbon black and/or reinforcing inorganic filler) is from 5 to 100 phr, more preferably from 50 to 100 phr, the optimum being in a known way different depending on the specific applications targeted: the level of the reinforcement expected with regard to a bicycle tire, for example, is, of course, less than that required with regard to a tire capable of running at high speed in a sustained manner, for example, a motor cycle tire, a tire for a passenger vehicle or a tire for a commercial vehicle, such as a heavy duty vehicle.

### Coupling Agent

As used herein, the term "coupling agent" is meant to refer to any agent capable of facilitating stable chemical and/or physical interaction between two otherwise non-interacting species, e.g., between a filler and a diene elastomer. Coupling agents cause silica to have a reinforcing effect on the rubber. Such coupling agents may be pre-mixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

The coupling agent may be a sulfur-based coupling agent, an organic peroxide-based coupling agent, an inorganic coupling agent, a polyamine coupling agent, a resin coupling agent, a sulfur compound-based coupling agent, oxime-nitrosamine-based coupling agent, and sulfur. Among these, preferred for a rubber composition for tires is the sulfur-based coupling agent.

In an embodiment, the coupling agent is at least bifunctional. Non-limiting examples of bifunctional coupling agents include organosilanes or polyorganosiloxanes. Other examples of suitable coupling agents include silane polysulfides, referred to as "symmetrical" or "unsymmetrical" depending on their specific structure. Silane polysulphides can be described by the formula (V):

Z-A-Sₓ-A-Z (V),

in which x is an integer from 2 to 8 (preferably from 2 to 5); the A symbols, which are identical or different, represent a divalent hydrocarbon radical (preferably a Ci-Cis alkylene group or a C₆-C₁₂ arylene group, more particularly a C₁-C₁₀, in particular C₁-C₄, alkylene, especially propylene); the Z symbols, which are identical or different, correspond to one of the three formulae (VI): 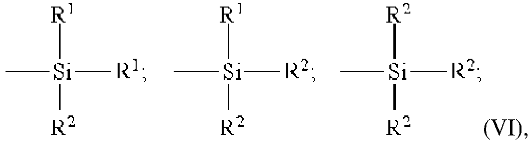 in which the R¹ radicals, which are substituted or unsubstituted and identical to or different from one another, represent a C₁-C₁₈ alkyl, C₅-C₁₈ cycloalkyl or C₆-C₁₈ aryl group (preferably C₁-C₆ alkyl, cyclohexyl or phenyl groups, in particular C₁-C₄ alkyl groups, more particularly methyl and/or ethyl); the R² radicals, which are substituted or unsubstituted and identical to or different from one another, represent a Ci-Cis alkoxyl or C₅-C₁₈ cycloalkoxyl group (preferably a group selected from Ci-Cs alkoxyls and C₅-C₈ cycloalkoxyls, more preferably still a group selected from C₁-C₄ alkoxyls, in particular methoxyl and ethoxyl).

Non-limiting examples of silane polysulphides include bis((C₁-C₄)alkoxy(C₁-C₄)alkylsilyl(C₁-C₄)alkyl)polysulphides (in particular disulphides, trisulphides or tetrasulphides), such as, for example, bis(3-trimethoxysilylpropyl) or bis(3-triethoxysilylpropyl)polysulphides. Further examples include bis(3-triethoxysilylpropyl)tetrasulphide (TESPT) of formula [(C₂H₅O)₃Si(CH₂)₃S₂]₂, or bis(triethoxysilylpropyl)disulphide (TESPD) of formula [(C₂H₅O)₃Si(CH₂)₃S]₂. Other examples include bis (mono(C₁-C₄)alkoxyldi(C₁-C₄)alkylsilylpropyl)polysulphides (in particular disulphides, trisulphides or tetrasulphides), more particularly bis(monoethoxydimethylsilylpropyl)tetrasulphide. Examples of silane coupling agents are TESPT (Si69^{®} from Evonik Industries) and bis[3-(diethoxy octyloxysilyl)propyl]tetrasulfide (an experimental product from Shin-Etsu).

The coupling agent can also be bifunctional POSs (polyorganosiloxanes), or hydroxysilane polysulphides, or silanes or POSs bearing azodicarbonyl functional groups. The coupling agent can also include other silane sulphides, for example, silanes having at least one thiol (-SH) functional group (referred to as mercaptosilanes) and/or at least one masked thiol functional group.

The coupling agent can also include combinations of one or more coupling agents such as those described herein, or otherwise known in the art. A preferred coupling agent comprises alkoxysilane or polysulphurized alkoxysilane. A particularly preferred polysulphurized alkoxysilane is bis(triethoxysilylpropyl) tetrasulphide, which is commercially available by Degussa under the trade name X50S^{™}.

### Plasticizer and Resin

As used herein, the term "plasticizer" (also referred to as a processing oil), refers to a petroleum derived processing oil and synthetic plasticizer. Such oils are primarily used to improve the processability of the composition. Suitable plasticizers include, but are not limited to, aliphatic acid esters or hydrocarbon plasticizer oils such as paraffinic oils, aromatic oils, naphthenic petroleum oils, and polybutene oils. A particularly preferred plasticizer is naphthenic oil, which is commercially available by Nynas under the trade name NYTEX^{™} 4700.

MES and TDAE oils are well known to a person skilled in the art; for example, reference is made to publication KGK (Kautschuk Gummi Kunstoffe), 52nd year, No. 12/99, pp. 799-805, entitled "Safe Process Oils for Tires with Low Environmental Impact".

Mention may be made, as examples of MES oils (whether they are of the "extracted" or "hydrotreated" type) or of TDAE oils, for example, of the products sold under the names FLEXON^{™} 683 by ExxonMobil, VIVATEC^{™} 200 or VIVATEC^{™} 500 by H&R European, PLAXOLENE^{™} MS by Total, or CATENEX^{™} SNR by Shell.

The resins (it should be remembered that the term "resin" is reserved by definition for a solid compound) formed of C₅ fraction/vinylaromatic copolymer, in particular of C₅ fraction/styrene or C₅ fraction/C₉ fraction copolymer, are well known; they have been essentially used to date for application as tackifying agents for adhesives and paints but also as processing aids in tire rubber compositions. An example of a hydrocarbon resin is Oppera^{™} PR373 from ExxonMobil Chemical Co.

Other suitable plasticizers for use in the present invention include "triesters" or "fatty acids." Triester and fatty acid generally refer to a mixture of triesters or a mixture of fatty acids, respectively. The fatty acid preferably consists of more than 50%, more preferably to more than 80% by weight of an unsaturated C18 fatty acid, that is to say one selected from among the group consisting of oleic acid, linoleic acid, linolenic acid and mixtures thereof. More preferably, be it synthetic or natural in origin, the fatty acid used is constituted to more than 50% by weight, more preferably still to more than 80% by weight, of oleic acid.

In other words, very particularly a glycerol trioleate, derived from oleic acid and glycerol, is used. Among the preferred glycerol trioleates, mention will be made in particular, as examples of natural compounds, of the vegetable oils sunflower oil or rapeseed oil having a high content of oleic acid (more than 50%, more preferably more than 80% by weight).

The glycerol triester is used in a preferred amount of between 5 and 80 phr, more preferably of between 10 and 50 phr, in particular within a range from 15 to 30 phr, in particular when the tread of the invention is intended for a passenger-type vehicle. In the light of the present description, the person skilled in the art will be able to adjust this amount of ester as a function of the specific conditions of embodiment of the invention, in particular the amount of inorganic filler used.

### Antidegradants

Antidegradants encompass antioxidants, antiozonants and waxes. Antiozonanats are used to protect rubber products from ozone. Waxes are also used to provide rubber ozone protection. An example of an antiozone wax is AKROWAX^{™} 5084 from AkroChem.

As used herein, the term "antioxidant" refers to a chemical that combats oxidative degradation. Suitable antioxidants include diphenyl-p-phenylenediamine and those disclosed in The Vanderbilt Rubber Handbook (1978), Pages 344 to 346. A particularly preferred antioxidant is para-phenylenediamines, which is commercially available by Eastman under the trade name SANTOFLEX^{™} 6PPD (N-(1,3-Dimethylbutyl)-N'-phenyl-1,4-phenylenediamine). Another preferred antioxidant is a high-molecular-weight, hindered amine light stabilizer, which is commercially available as CHIMASSORB^{®} 2020 from BASF Corp.

### Crosslinking Agents, Curatives, Cure Packages, and Curing Processes

The elastomeric compositions and the articles made from those elastomeric compositions described herein are generally manufactured with the aid of at least one cure package, at least one curative, at least one vulcanizing or crosslinking agent, and/or undergo a process to cure the elastomeric composition. As used herein, at least one curative package refers to any material or method capable of imparting cured properties to a rubber as is commonly understood in the industry. Preferred crosslinking agents are sulfur, sulfur halides, organic peroxides, quinone dioximes, organic polyvalent amine compounds, methylol group-containing alkylphenol resins and the like are mentioned. A preferred crosslinking agent is sulfur. The amount of sulfur to be blended is preferably from 0.1 to 5 parts by mass and more preferably from 0.5 to 3 parts by mass based on 100 parts by mass of the total of the polymer components contained in the polymer composition.

The sulfur may be provided either as free sulfur, through a sulfur donor or combinations thereof. Suitable free sulfur includes, for example, pulverized sulfur, rubber maker's sulfur, commercial sulfur, and insoluble sulfur. A source of free sulfur is super fine sulfur available from Rubbermakers (Harwick Standard Distribution Corp.).

Examples of sulfur donors are amine disulfides, tetramethyl thiuram disulfide (Akrochem TMTD), 4,4'-dithiodimorpholine (Akrochem DTDM), dipentamethylene thiuram tetrasulfide (Akrochem DPTT) and thiocarbamyl sulfonamide (Akrochem Cure-Rite 18).

The cure package may also contain various chemicals, additives, and the like which are commonly used in the rubber industry, as desired. Examples of such chemicals or additives include vulcanizing aids, processing aids, vulcanizing accelerators, process oils, anti-aging agents, anti-scorching agents, and activators such as zinc oxide, stearic acid, and the like. In one embodiment, the activator is zinc oxide or stearic acid. In a further embodiment, the activator is a combination of zinc oxide and stearic acid. An example of zinc oxide is zinc oxide in naphthenic oil such as AKRO-ZINC^{®} BAR 85 available from Akrochem Corp.

In another embodiment, the amount of the vulcanizing aid and the processing aid to be blended is usually from 0.5 to 5 parts by mass based on 100 parts by mass of the total of the polymer components contained in the polymer composition.

Examples of vulcanizing accelerators are sulfenamide-based, guanidine-based, thiuram-based, thiourea-based, thiazole-based, dithiocarbamic acid-based, and xanthogenic acid-based compounds, and preferably include 2-mercaptobenzothiazole, dibenzothiazyl disulfide, N-cyclohexyl-2-benzothiazylsulfenamide, N-t-butyl-2-benzothiazolesulfenamide, N-oxyethylene-2-benzothiazolesulfenamide, N-oxyethylene-2-benzothiazolesulfenamide, N,N'-diisopropyl-2-benzothiazolesulfenamide, diphenylguanidine, diorthotolylguanidine, orthotolylbisguanidine, and the like.

Examples of dithiocarbamic acid-based vulcanizing accelerators are tetramethylthiuram monosulfide (TMTM), tetramethylthiuram disulfide (TMTD) and zinc diethylthiocarbamate (ZDEC). Examples of sulfenamide-based vulcanizing accelerators are N-cyclohexyl-2-benzothiazylsulfenamide (CBS), N-t-butyl-2-benzothiazolesulfenamide (TBBS), N-oxyethylene-2-benzothiazolesulfenamide, N-oxyethylene-2-benzothiazolesulfenamide, N,N'-diisopropyl-2-benzothiazolesulfenamide, 2-morpholinothiobenzothiazole (MBS) and N-dicyclohexylbenzothiazole-2-sulfenamide (DCBS). Examples of benzothiazole-based vulcanizing accelerators are 2-mercaptobenzothiazole (MBT), dibenzothiazyl disulfide and 2,2'-dithiobisbenzothiazole (MBTS).

Preferably, the vulcanizing accelerator is N-cyclohexyl-2-benzothiazylsulfenamide (CBS) available from Kemai Chemical Co. Another preferred vulcanizing accelerator is diphenyl guanidine available as Ekaland DPG from MLPC International (Arkema).

The vulcanizing accelerator may be a single vulcanizing accelerator or a mixture of accelerators. Preferably, the mixture of accelerators is a mixture of different types of accelerators, such as a benzothiazole-based vulcanizing accelerator with a dithiocarbamic acid-based vulcanizing accelerator or a guanidine-based vulcanizing accelerator.

The amount of the vulcanizing accelerator (or mixture thereof) to be blended is usually from 0.1 to 5 parts by mass and preferably from 0.4 to 4 parts by mass based on 100 parts by mass of the total of the polymer components contained in the polymer composition.

### Tire Tread Formulations

In one embodiment, a tire tread composition comprises the elastomeric composition described herein. In another embodiment, an article comprises the tire tread composition described herein. In another embodiment, a tread for a summer tire comprises the tire tread composition described herein.

The tire tread composition has many desirable properties when the functionalized or unfunctionalized polymer selected from the group consisting of ethylene-propylene-diene terpolymer, butyl rubber, poly(isobutylene-co-para-methylstyrene) and poly(isobutylene-co-para-methylstyrene-co-isoprene) terpolymer is present in the elastomeric compositions.

One way of measuring a desirable property of a tread composition is by utilizing the Dynamic Mechanical Thermal Analysis (DMTA) test method. All tire tread compositions were compression molded and cured into pads. Afterward, a rectangular test specimen (12 mm wide & 30 mm long) is died out of the cured pads and mounted on an ARES G2 (Advanced Rheometric Expansion System, TA Instruments) for dynamic mechanical testing in torsion rectangular geometry. Though the thickness of the test specimen is measured manually for each test. A strain sweep at room temperature up to 5.5% strains and at 10 Hz was conducted first followed by a temperature sweep at 4% strain and 10 Hz from -26°C to 100°C at 2°C/min ramp rates. Storage and loss moduli are measured along with the loss tangent values. For better wet traction, it is preferred to have higher loss tangent values at a temperatures of 0oC. For better rolling resistance, the loss tangent is preferred to be lower at a temperature of 60°C.

As measured by the DMTA test method, the temperature at which the maximum tan delta occurred is recorded is the glass transition temperature, Tg. The maximum Energy Loss (Tangent Delta, wherein the slope is zero) of the immiscible polyolefin domain of the cured composition is at a temperature within the range from about -60 to 20°C, preferably at about -30 to 10°C. More preferably, the Tg temperature is within the range from about -30 to -10°C, -25 to -15°C or -20 to -15°C.

The various descriptive elements and numerical ranges disclosed herein for the polymer selected from the group consisting of ethylene-propylene-diene terpolymer, butyl rubber, poly(isobutylene-co-para-methylstyrene) and poly(isobutylene-co-para-methylstyrene-co-isoprene) terpolymer, the reactants used to make these polymers, and their use in tire tread compositions can be combined with other descriptive elements and numerical ranges to describe the invention(s); further, for a given element, any upper numerical limit can be combined with any lower numerical limit described herein. The features of the invention are described in the following non-limiting examples.

### EXAMPLES

The features of the invention are described in the following non-limiting examples. Preparation of the compounds of Examples 1-11 are described below. However, those skilled in the art will recognize that other procedures can also be suitable.

### Example 1. Preparation of partially (ca. 20%) epoxidized Butyl rubber via reactive mixing process.

All mixing experiments were performed in a Brabender Intelli-torque internal mixer using roller type 6 blades. The mixer temperature was set to 70°C. 60 g of Butyl 365 (ExxonMobil Chemical) was fluxed for 30 seconds at 25 rpms, 1.3 g of 3-chloroperbenzoic acid (Aldrich, <77% purity) was added slowly to the mixer. Once addition is complete, the compound was mixed for 10-12 minutes at 60 rpms. The epoxidized Butyl product was removed from the mixer and cooled to room temperature by pressing between two Teflon sheets in a Carver press.

The partially (ca. 20%) epoxidized Butyl product was characterized using proton NMR spectroscopy showing the oxirane proton at 2.7 ppm, and the remaining isoprene olefinic protons at 4.97 and 5.05 ppm.

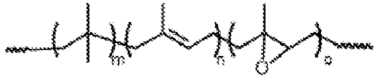

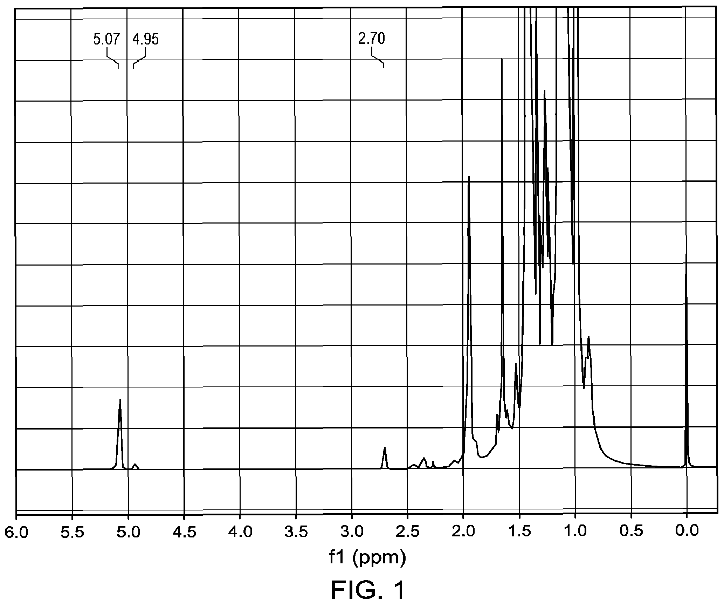

The ¹H-NMR spectra of the partially epoxidized butyl rubber obtained via reactive mixing (Example 1) is disclosed at Figure 1.

### General ¹H-NMR test method for the Examples on this invention

In a glass vial, add 50mg of sample and ~1 mL of 99.8*%* CDCl₃ with 0.03*%* (v/v) TMS. Place on wrist action shaker until completely dissolved ~2 hours. Transfer the solution to a new NMR tube (using Deuterotubes BORO400-5-7) ensuring that all sample is dissolved and there are no solids remaining. Run the PROTON experiment on the Bruker 500 MHz NMR locked onto CDCl₃ as the solvent and using the standard parameters below:
NUC: 1H
DS: 2
NS:16
TD0: 1
AQ: 3.27 seconds
SW: 19.99 ppm or 10,000 Hz
Zg30 is a 30° pulse; 5mm probe, 16 scans, 1s delay, 500MHz.

Analyze the spectra using MestReNova software. Perform a manual phase correction and baseline correction before integration.

### Example 2. Preparation of partially (ca. 20%) epoxidized ethylene-propylene-diene terpolymer via a reactive mixing process.

All mixing experiments were performed in a Brabender Intelli-torque internal mixer using roller type 6 blades. The mixer temperature was set to 70°C. 60 g of ethylene-propylene-diene terpolymer (90.6 wt*%* C3, 6.9 wt*%* C2, 2.5 wt*%* ENB) was fluxed for 30 seconds at 25 rpms, 0.56 g of 3-chloroperbenzoic acid (Aldrich, <77% purity) was added slowly to the mixer. Once addition is complete, the compound was mixed for 10-12 minutes at 60 rpms. The epoxidized ethylene-propylene-diene terpolymer product was removed from the mixer and cooled to room temperature by pressing between two Teflon sheets in a Carver press.

The partially epoxidized (ca. 20%) ethylene-propylene-diene terpolymer product was characterized using proton NMR spectroscopy showing the oxirane proton at 3.09 ppm, and the ENB olefinic protons at 5.21 and 5.01 ppm.

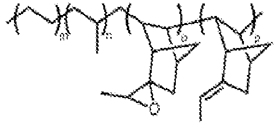

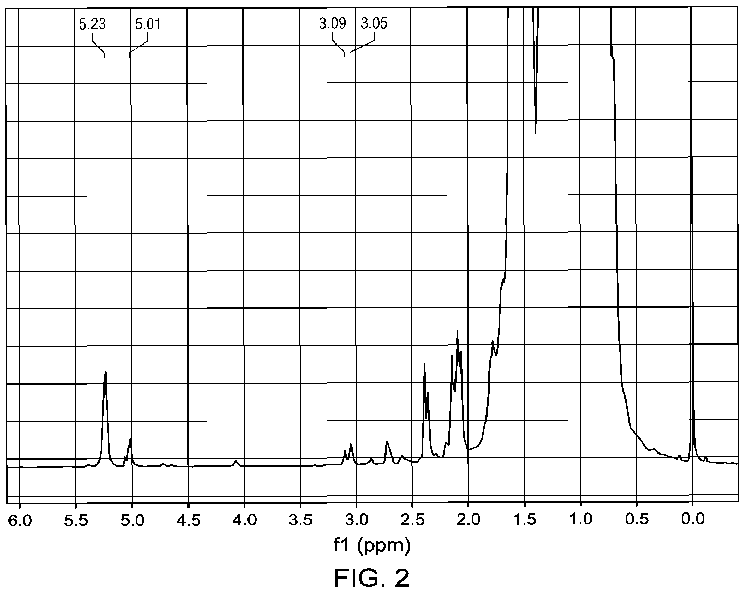

The ¹H-NMR spectra of partially epoxidized ethylene-propylene-diene terpolymer obtained by a reactive mixing process (Example 2) is disclosed at Figure 2.

### Example 3: Preparation of thioacetate functionalized poly(isobutylene-co-para-methylstyrene) by a solution process.

Nucleophilic substitution reaction of potassium thioacetate with Exxpro^{™} (NPX 1602) was conducted in a 50L glass reactor equipped with a stirrer and chiller. Dry Tetrahydrofuran (THF) (water ppm ≤ 10 ppm) was prepared by passing 99 % THF (Sigma Aldrich) through 3A molecular sieve. 4000g of Exxpro^{™} (Mn = 221000 g/mole; 5002 g/mole Br; 0.799 mole) was added to the 50L reactor under nitrogen blanket. The polymer was dissolved in the already prepared dry THF (38L) at constant stirring at 25 °C for 12 hours or until the polymer is dissolved. A slurry of 2.96 mole (260g) of potassium thioacetate, was prepare with 1L of dry THF. The slurry was added to the polymer solution slowly, with constant stirring. The reaction mixture was held at 25 °C for 24 h. At the end of the stipulated time, the reaction mixture is introduced into the quench pot containing 100L of isopropanol, to precipitate the functionalized polymer. The ppt. polymer was re-dissolved in a reactor containing 20L of isohexane and 2wt% of Butylated hydroxytoluene (BHT; Sigma Aldrich). The re-dissolved polymer was introduced into the 50L steam stripping pot, connected with a condenser and a chiller. The steam stripping is done using 20Kg/h of steam under nitrogen blanket. The steam stripped functionalized polymer was finally dried using heated roll mill to obtain 4200 g of functionalized Exxpro^{™}.

The dried polymer was characterized using proton NMR spectroscopy & FTIR. Complete conversion was achieved in 24h. 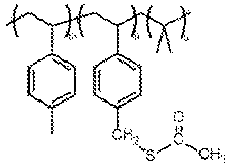 The thioacetate functionalized poly(isobutylene-co-para-methylstyrene) product was characterized using proton NMR spectroscopy showing complete disappearance of methylene proton (~ CH₂Br), with new resonance appearing at 4.09 ppm for ~ CH₂S-COCH₃

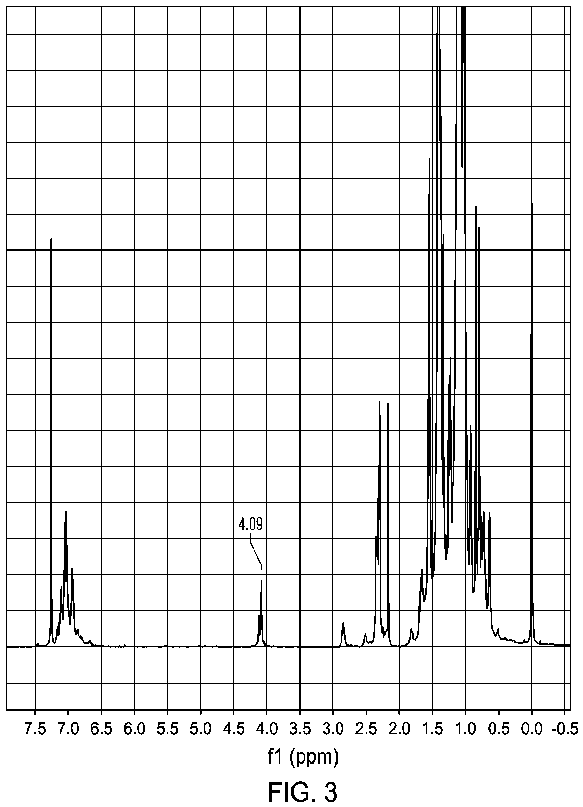

The ¹H-NMR spectra of the thioacetate functionalized poly(isobutylene-co-para-methylstyrene) obtained by a solution mixing process (Example 3) is disclosed at Figure 3.

### Example 4: Preparation of thioacetate functionalized butyl rubber by reactive mixing process.

All reactive mixing experiments were performed in a Brabender Intelli-torque internal mixer using roller type 6 blades. The mixer temperature was set to between 120-150°C. 60 g of Bromobutyl 2222 (ExxonMobil Chemical) was added to mixer and allowed to flux for 30 seconds at 25 rpm, ca. 1 g of tetrabutyl ammonium bromide (TBAB) and ca. 1.69 - 1.78 g (1.20 - 1.26 mol. equiv. to allylic-Br) of potassium thioacetate. The mixing speed was set to 60 rpm and the reactive mixing was also done sequentially by adding TBAB first and allowed to mix for 10-15 minutes, then potassium thioacetate was added and allowed to mix further for 10-15 minutes. The final mix was removed from the mixer and cooled to room temperature by pressing between two Teflon sheets in a Carver press. The final products was obtained in quantitative yield with ca. >80% conversion by ¹H-NMR analysis.

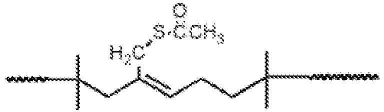

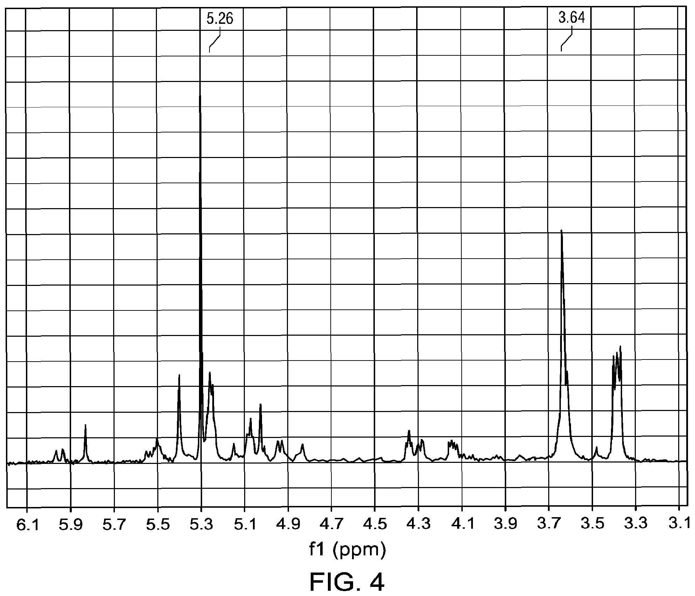

The ¹H-NMR spectra of the thioacetate functionalized butyl rubber obtained by a reactive mixing process (Example 4) is disclosed at Figure 4.

### Example 5: Preparation of mercaptobenzothiazole functionalized poly(isobutylene-co-para-methylstyrene) by a reactive mixing process.

All reactive mixing experiments were performed in a Brabender Intelli-torque internal mixer using roller type 6 blades. The mixer temperature was set to between 70-120°C. 60 g of BIMSM (Exxpro^{™} NPX 1602 from ExxonMobil Chemical) was added to mixer and allowed to flux for 30 seconds at 25 rpm, 0.45 g (0.11 mol. equiv. to PMS-Br) of tetrabutyl ammonium bromide (TBAB) and 3.09 g (1.25 mol. equiv. to PMS-Br) of sodium mercaptothiazole. The mixing speed was set to 60 rpm and allowed to mix for 15 minutes. The final mix was removed from the mixer and cooled to room temperature by pressing between two Teflon sheets in a Carver press. The final product was obtained in quantitative yield with >92% conversion by ¹H-NMR analysis.

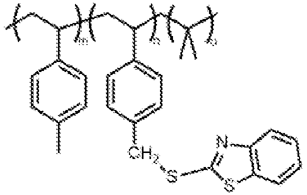

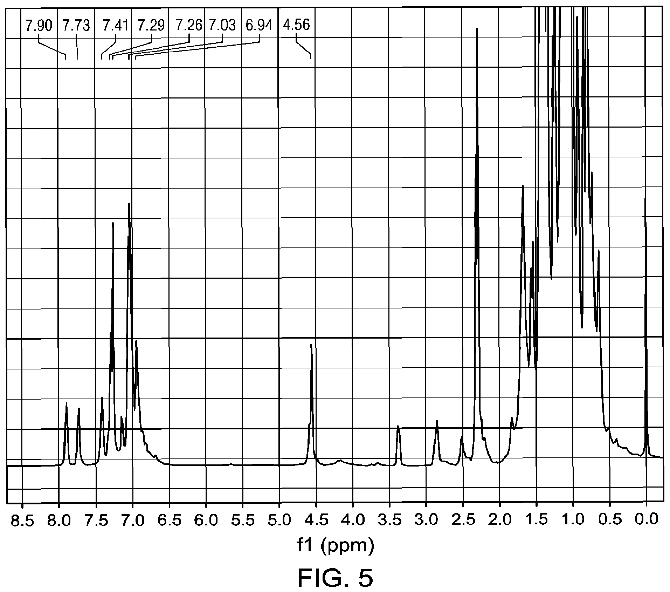

The ¹H-NMR spectrum of the mercaptobenzothiazole functionalized poly(isobutylene-co-para-methylstyrene) (Example 5) obtained by a reactive mixing process is disclosed at Figure 5.

### Example 6: Preparation of mercaptobenzothiazole functionalized butyl rubber by reactive mixing process.

All reactive mixing experiments were performed in a Brabender Intelli-torque internal mixer using roller type 6 blades. The mixer temperature was set to between 70-120°C. 60 g of Bromobutyl 2222 (ExxonMobil Chemical) was added to mixer and allowed to flux for 30 seconds at 25 rpm, 0.45 g of tetrabutyl ammonium bromide (TBAB) and 2.94 g (ca. 1.20 mol. equiv. to allylic-Br) of sodium mercaptothiazole. The mixing speed was set to 60 rpm and allowed to mix for 15-30 minutes. The final mix was removed from the mixer and cooled to room temperature by pressing between two Teflon sheets in a Carver press. The final product was obtained in quantitative yield with >94% conversion by ¹H-NMR analysis.

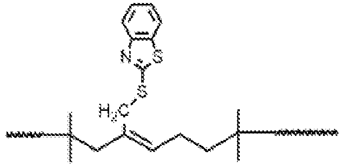

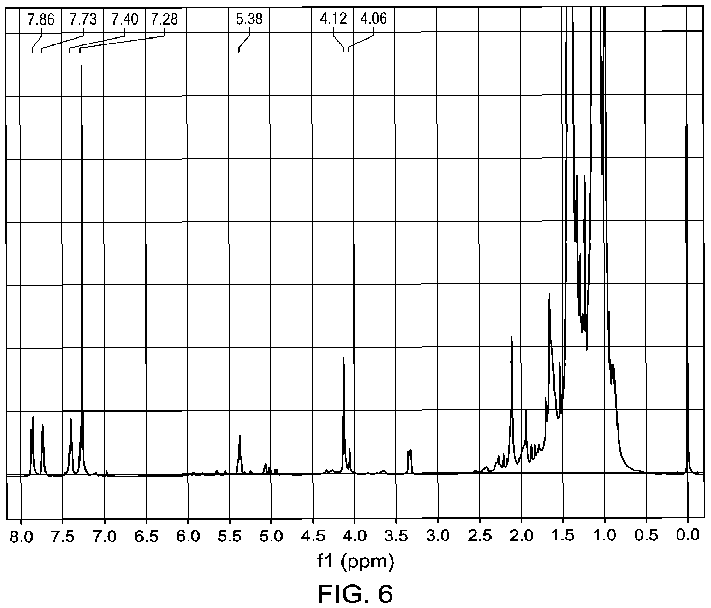

The ¹H-NMR spectra of the mercaptobenzothiazole functionalized butyl rubber obtained by a reactive mixing process (Example 6) is disclosed at Figure 6.

### Example 7: Preparation of modified BIMSM-amine ionomer via a reactive mixing process.

All mixing experiments were performed in a Brabender Intelli-torque internal mixer using roller type 6 blades. The mixer temperature was set to 120°C. 60 g of BIMSM (Exxpro^{™} NPX 1602 from ExxonMobil Chemical) elastomer 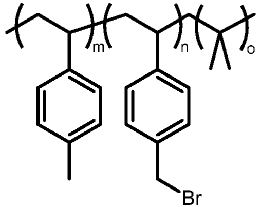 was fluxed for 30 seconds at 60 rpms, 0.5 g (0.13 mol equiv.) of Armeen DMSVD from AkzoNobel was added slowly to the mixer. Once addition is complete, the compound was mixed for 10-12 minutes at 60 rpms. The modified Exxpro^{™} product mixture was removed from the mixer and cooled to room temperature by pressing between two Teflon sheets in a Carver press.

The resulting BIMSM-amine ionomer product derived from a dimethyl soyaalkylamine (Armeen DMSVD from AkzoNobel) was characterized using proton NMR spectroscopy showing both the methylene proton (~ CH₂Br), along with a new resonance appearing at 5.38 ppm for olefinic signal.

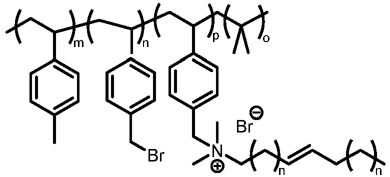

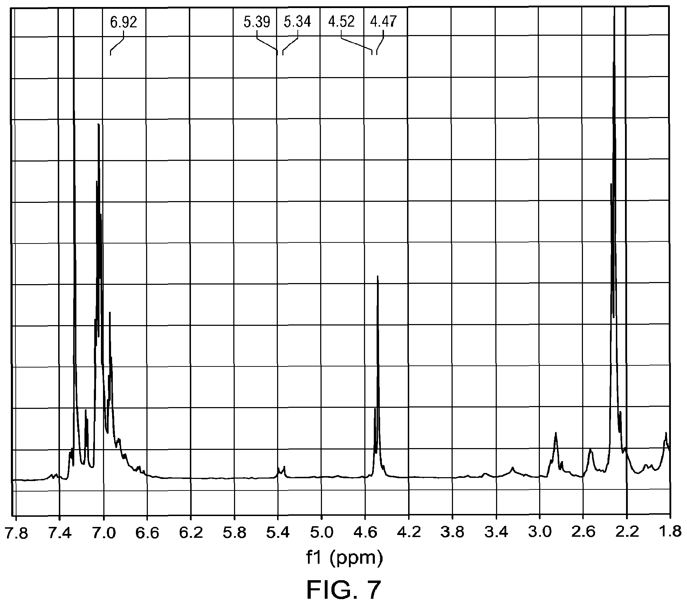

The ¹H-NMR spectra of the BIMSM-amine ionomer obtained by a reactive mixing process (Example 7) is disclosed at Figure 7.

### Example 8: Preparation of modified butyl-amine ionomer via a reactive mixing process.

All mixing experiments were performed in a Brabender Intelli-torque internal mixer using roller type 6 blades. The mixer temperature was set to 120-150°C. 60 g of Bromobutyl 2222 (ExxonMobil Chemical) was fluxed for 30 seconds at 60 rpms, 1.41 g (0.54 mol equiv.) of Armeen DMSVD from AkzoNobel was added slowly to the mixer. Once addition is complete, the compound was mixed for 10-15 minutes at 60 rpms. The modified butyl product mixture was removed from the mixer and cooled to room temperature by pressing between two Teflon sheets in a Carver press.

The resulting butyl-amine ionomer product was characterized using proton NMR spectroscopy showing both the endo-allylic protons at 4.05, 4.09 ppm along with a new olefinic peak at 5.38 ppm.

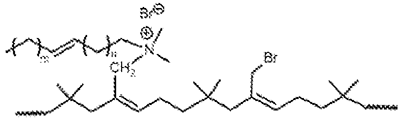

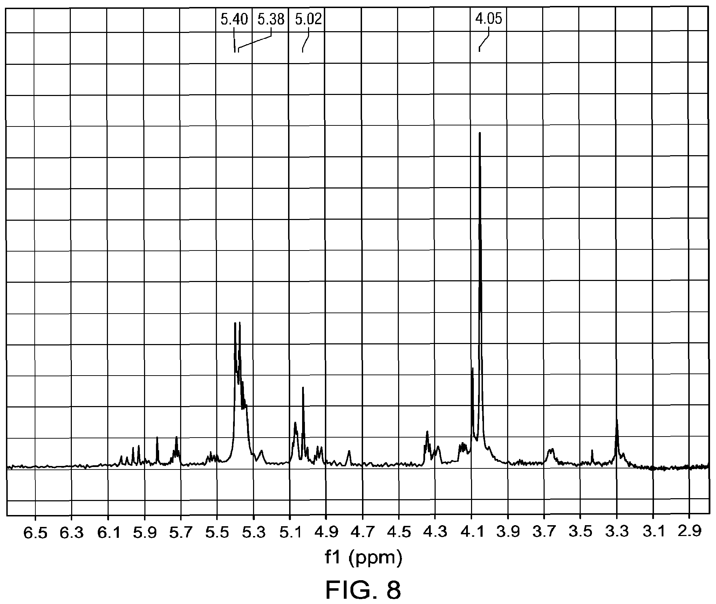

The 1H-NMR spectra of the butyl-amine ionomer obtained by a reactive mixing process (Example 8) is disclosed at Figure 8.

### Example 9. Preparation of modified poly(isobutylene-co-para-methylstyrene) containing citranellol side chain substituents via etherfication using a solution process.

Nucleophilic substitution reaction of Citronellol with Exxpro^{™} NPX 1602 (ExxonMobil Chemical) was conducted in a 50L glass reactor equipped with a stirrer and chiller. Dry Tetrahydrofuran (THF) (water ppm ≤ 10 ppm) was prepared by passing 99 % THF (Sigma Aldrich) through 3A molecular sieve. 4000g of Exxpro^{™} (Mn = 221000 g/mole; 5002 g/mole Br; 0.799 mole) was added to the 50L reactor under nitrogen blanket. The polymer was dissolved in the already prepared dry THF (38L) at constant stirring at 25 °C for 12 hours or until the polymer is dissolved. A catalyst slurry/sodium alkoxide of 7.99 mole (320g) of Sodium Hydride (60*%* oil), was prepared by adding slowly 1L of dry THF & 1.45 L (1247g, 8.0 moles) of Citronellol under constant stirring. Once the evolution of hydrogen gas is complete, the catalyst slurry prepared was added slowly to the reactor containing dissolved polymer. The reaction mixture was held at 25 °C for 24 h. At the end of the stipulated time, the reaction mixture is introduced into the quench pot containing 100L of isopropanol, to precipitate the functionalized polymer. The ppt. polymer was re-dissolved in a reactor containing 20L of isohexane and 2wt% of Butylated hydroxytoluene (BHT; Sigma Aldrich). The re-dissolved polymer was introduced into the 50L steam stripping pot, connected with a condenser and a chiller. The steam stripping is done using 20Kg/h of steam under nitrogen blanket. The steam stripped functionalized polymer was finally dried using heated roll mill to obtain 4200 g of functionalized Exxpro^{™}.

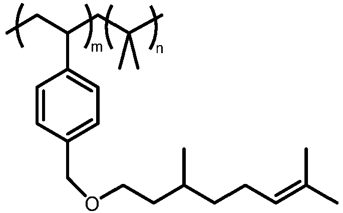

The dried polymer was characterized using proton NMR spectroscopy & FTIR. 1H NMR spectroscopy showed complete disappearance of methylene proton (~ CH2Br), with new resonance appearing at 4.5 ppm for ~ CH2O and olefinic signal at 5.1 ppm suggesting complete conversion at the end of 24h.

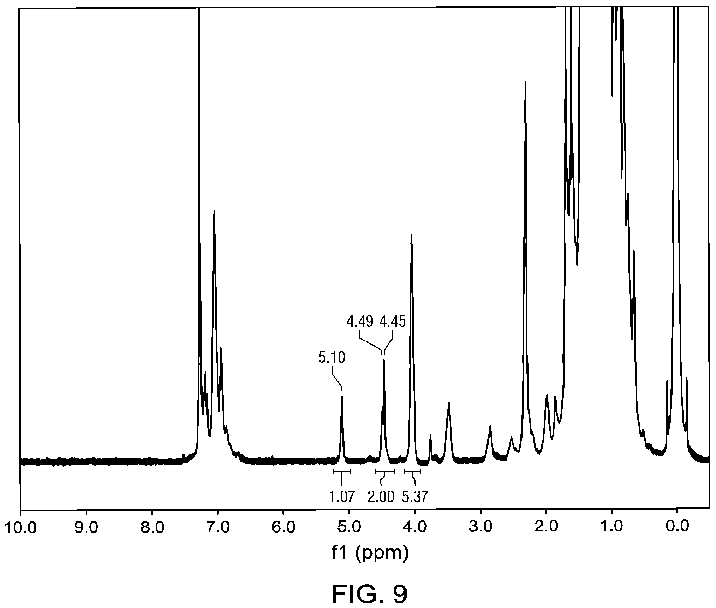

The ¹H-NMR spectra of the modified poly(isobutylene-co-para-methylstyrene) containing citranellol obtained by solution process (Example 9) is disclosed at Figure 9. Example 10. Preparation of (isobutylene-co-isoprene-co-para-methylstyrene) terpolymer.

The IB-IP-PMS terpolymer samples were prepared using standard slurry cationic polymerization technique in a dry box. A premixed para-methyl styrene, isoprene, and isobutylene monomer solution in MeCl was prepared at -95 °C. An initiator/co-initiator solution of HCl/EtAlCl2 in MeCl was also prepared at -95 °C.

The initiator/co-initiator solution was added slowly into mixed monomer solution with stirring.

After approximately 5-10 minutes, the reaction was quenched with a small aliquot of isopropyl alcohol. The resulting polymer was obtained by coagulation with isopropyl alcohol and further dried in a vacuum oven at 50 °C overnight. The overall monomer conversion was approximately about 62 to 82%.

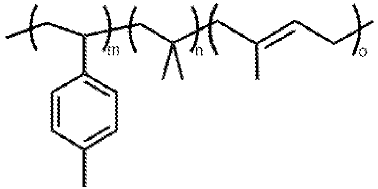

| **Composition (mol%)** | **Terpolymer 1** |
|---|---|
| p-methylstyrene | 6.57 |
| isoprene | 0.45 |
| isobutylene | 92.97 |

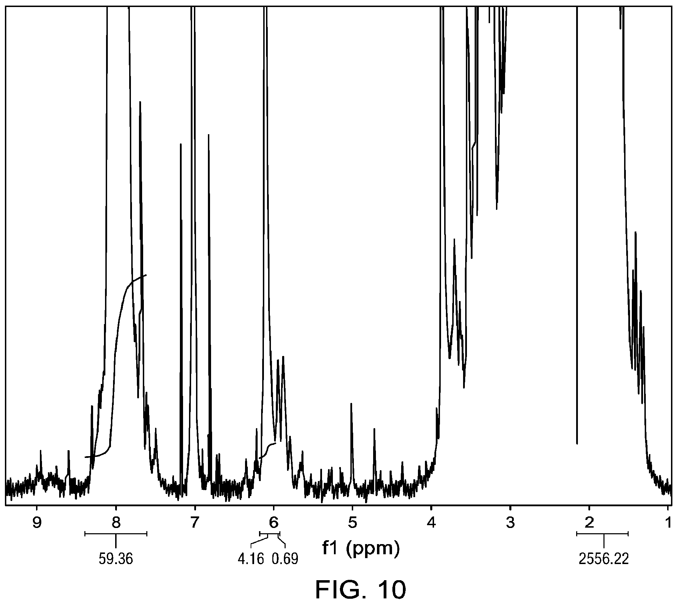

Isobutylene-co-isoprene-co-para-methylstyrene terpolymer 1 contained 6.57 mol% p-methylstyrene, 0.45% mol% isoprene and 92.97 mol% isobutylene. The ¹H-NMR spectra of poly(isobutylene-co-para-methylstyrene-co-isoprene) terpolymer 1 is disclosed at Figure 10. ¹H-NMR test method for Isobutylene-Isoprene-p-methylstyrene terpolymer

¹H NMR samples were prepped at room temperature in CDCl₃ (deuterated chloroform) with a concentration of 20mg/ml.

Samples were run under the following conditions, magnetic field of at least 500MHz, 5mm probe, 25°C, 30° tip angle, 800 transients, and a 5 second delay. Reference to isobutylene CH₃ peak at 1.12ppm.

### Proton NMR peak assignment for Isobutylene-Isoprene-p-methylstyrene terpolymer

| **Name** | **Shift** | **# Protons** |
|---|---|---|
| I_{PIB} | .5-1.17ppm | 6 |
| I_{1,4 Isoprene} | 5.02-5.16ppm | 1 |
| I_{Minor isoprene} | 4.92-4.97ppm | 1 |
| I_{PMS} | 6.2-7.2ppm | 4 |

| | | |
|---|---|---|
| I=intensity/ area PIB=IPIB/6 1,4= I1,4 isoprene Minor= Iminor isoprene PMS=IPMS/4 Total=PIB+1,4+minor+PMS Mole % PIB =PIB/total*100 Mole % 1,4=1,4/total*100 Mole % PMS=PMS/total* 100 | | |

### Example 11. Preparation of amorphous propylene-based copolymers.

Catalyst system: Catalyst precursor was bis((4-triethylsilyl)phenyl)methylene(cyclopentadienyl)(2,7-di-tert-butyl-fluoren-9-yl) hafnium dimethyl. However, other metallocene precursors with good diene incorporation and MW capabilities could also be used.

The activator was dimethylanilinium tetrakis(pentafluorophenyl)borate, but dimethylanilinium-tetrakis(heptafluoronaphthyl)borate and other non-coordinating anion type activators or MAO could also be used.

The copolymer compositions were synthesized in a single continuous stirred tank reactor. A mixture containing unreacted monomers and solvent was fed to the reactor as fuel for a polymerization reaction. The polymerization was performed in solution using isohexane as solvent. During the polymerization process, hydrogen addition and temperature control were used to achieve the desired melt flow rate. The catalyst, activated externally to the reactor, was added as needed in amounts effective to maintain the target polymerization temperature.

In the reactor, the copolymer material was produced in the presence of ethylene, propylene, ethylidene norbornene, and a catalyst comprising the reaction product of N,N-dimethylanilinium tetrakis(pentafluorophenyl)borate and [cyclopentadienyl(2,7-di-t-butylfluorenyl)di-p-triethylsilanephenylmethane] hafnium dimethyl.

The copolymer solution emerging from the reactor was quenched and then devolatilized using conventionally known devolatilization methods, such as flashing or liquid phase separation, first by removing the bulk of the isohexane to provide a concentrated solution, and then by stripping the remainder of the solvent in anhydrous conditions using a devolatilizer so as to end up with a molten polymer composition containing less than 0.5 wt% of solvent and other volatiles. The molten polymer composition was advanced by a screw to a pelletizer from which the polymer composition pellets are submerged in water and cooled until solid.

The ethylene-propylene-diene terpolymer (EPDM) was characterized using proton and carbon NMR spectroscopy.

| **Composition (wt%)** | **EPDM 1** | **EPDM 2** |
|---|---|---|
| C3 (propylene) | 81.9 | 90.6 |
| C2 (ethylene) | 15.3 | 6.9 |
| ENB | 2.8 | 2.5 |

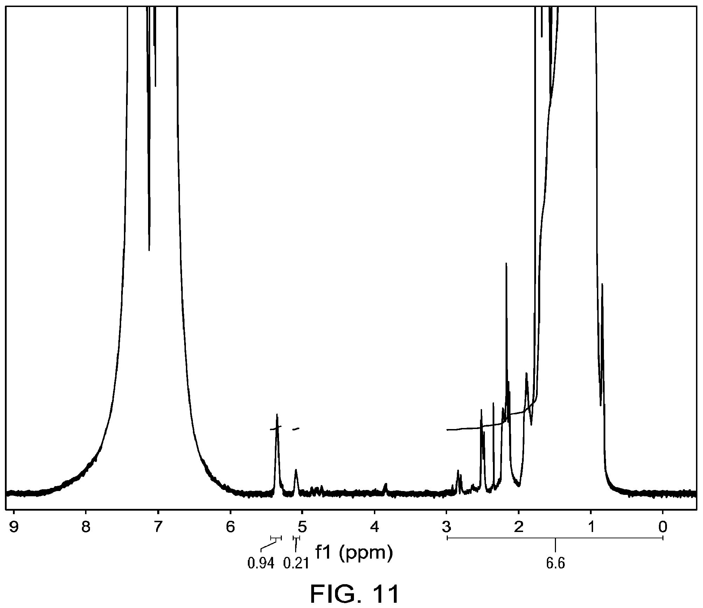

Ethylene-propylene-diene terpolymer, EPDM 1, contained 81.9 wt% propylene, 15.3 wt% ethylene and 2.8 wt% 5-ethylidene-2-norbornene (ENB). EPDM 2 contained 90.6wt*%* propylene, 6.9 wt*%* ethylene and 2.5 wt*%* ENB. The two ethylene-propylene-diene terpolymers differed in their ratio of propylene to ethylene. EPDM 1 contained more ethylene while EPDM 2 contained more propylene. The ¹H-NMR spectra of EPDM 1 is disclosed at Figure 11.

### ¹H-NMR test method for Ethylene-Propylene-Diene polymer (EPDM)

For ¹H NMR, sample preparation (polymer dissolution) was performed at 140°C where 20 miligrams of polymer was dissolved in an appropriate amount of solvent to give a final polymer solution volume of 1 ml.

The ¹H solution NMR was performed on a 5mm probe at a field of at least 500 MHz in an ODCB (ortho-dichlorobenzene) and benzene-d6 (C₆D₆) mixture (9:1) at 120°C with a flip angle of 30°, 15s delay, and 512 transients. Chemical shifts were referenced to the ODCB peak at 7.22 ppm. Signals were integrated and the 2-ethylidene-5-norbornene (ENB) weight percent was reported.

Calculation of ENB and double bonds was performed as shown below:
Imajor= Integral of major ENB species from 5.2-5.4 ppm
Iminor= Integral of minor ENB species from 4.6-5.12 ppm
Ialiph= (Integral of -CH2- from 0-3 ppm)
total= (ENB+EP)
total wt = (ENB*120+EP*14)

### Proton NMR peak assignment for EPDM

| **Peak Assignments** | **Intensity of species** | **MOLE %** | **WEIGHT %** |
|---|---|---|---|
| Olef: 5.3 and 5.1 ppm ENB | ENB= I_{major +} Iₘᵢₙₒᵣ | ENB*100/total | ENB* 120* 100/total wt |
| Aliphatic: 3 - 0 ppm | EP= (Iₐₗᵢₚₕ-11*ENB)/2 | EP* 100 /total | EP* 14* 100 /total wt |

The ¹³C solution NMR was performed on a 10mm cryopprobe of at least 600MHz in an ODCB (ortho-dichlorobenzene) and benzene-d6 (C₆D₆) mixture (9:1) at 120°C with a flip angle of 90° and inverse gated decoupling. Sample preparation (polymer dissolution) was performed at 140°C where 0.20 grams of polymer was dissolved in an appropriate amount of solvent to give a final polymer solution volume of 3 ml. Chemical shifts were referenced to the ODCB solvent central peak at 130ppm. ¹³C NMR determines the ethylene and propylene composition, not accounting for the ENB present.

Assignments for ethylene-propylene-diene terpolymers are based on Geert van der Velden, Macromolecules, 1983, 16, 85-89, and Kolbert et. al. Journal of Applied Polymer Science, 1999, 71, 523-530.

### Examples 12 to 25

### Additive Formulations

**Table 1 below lists the functionalized polymers and their respective additive formulation.**

| **Polymer Base** | **Compound ID Example** | **Polymer Example** | **Description** | **Additive Formulation** |
|---|---|---|---|---|
| Poly(isobutylene-co-para-methylstyrene) (Exxpro) | 12 | 5 | Exxpro-mercaptothiazole | 1 |
| | 13 | 7 | Exxpro-amine ionomer | 1 |
| | 14 | 3 | Exxpro-thioacetate | 2 |
| | 15 | 9 | Exxpro-citronellol | 2 |
| Butyl | 16 | 6 | Bromobutyl-Mercaptothiazole | 1 |
| | 17 | 8 | Bromobutyl-amine ionomer | 1 |
| | 18 | 4 | Bromobutyl thioacetate | 2 |
| | 19 | Commercial product | Exxon Bromobutyl 2222 | 1 |
| | 20 | Commercial product | Exxon Chlorobutyl 1066 | 1 |
| | 21 | Commercial product | Exxon Butyl 365 | 3 |
| | 22 | Commercial product | Exxon Butyl 065 | 2 |
| | 23 | 1 | Epoxidized Butyl | 2 |
| EPDM | 24 | 2 | Epoxidized EPDM | 2 |
| IB-IP-PMS Terpolymer | 25 | 10 | Terpolymer 1 | 2 |

The following additive formulations were used for Examples 12-26. All components are listed in phr, or part per hundred, of polymer unit. These compounds were mixed in suitable mixers, using one pass or multiple successive passes well known to the person skilled in the art. The mixing temperatures range between 110°C and 210°C. The duration of the mixing for each of the individual mixing steps is between 1 and 30 minutes depending on desired property. The amounts of components in the Additive Formulations are listed in the table below.

| **Ingredient** | **Additive Formulation 1 (phr)** | **Additive Formulation 2 (phr)** | **Additive Formulation 3 (phr)** |
|---|---|---|---|
| Polymer Listed in Table 1 | 100 | 100 | 100 |
| N330 carbon black (Vulcan^{®} 3 from Cabot Corp.) | 8 | 8 | 2.5 |
| High-molecular-weight, hindered amine light stabilizer (CHIMASSORB^{®} 2020 from BASF Corp.) | 0.8 | 0.8 | 0.8 |
| Super fine sulfur (Rubbermakers from Harwick Standard Distribution Corp.) | 2.5 | 2.5 | 2.5 |
| Zinc oxide in naphthenic oil (AKRO-ZINC^{®} BAR 85 from Akrochem Corp.) | | 1 | 1 |
| Stearic acid (97% stearic acid from Acros Organics) | | 1 | 1 |
| 50:50 blend of Si69^{®} and N330 carbon black (X50-S^{®} from Evonik Industries) | | | 10.5 |
| Total PHR | 111.3 | 113.3 | 118.3 |

### Tread Formulations

Low silica tire tread compound formulations for controls and examples are listed in the table below as TT1 to TT10. All components are listed in phr, or part per hundred, of polymer unit. These compounds were mixed in suitable mixers, using at least two successive passes well known to the person skilled in the art. The non-productive passes (mixing without crosslinking system) which have mixing at high temperatures between 110°C and 190°C. The non-productive passes are followed by a productive pass where the crosslinking system is added. The temperature for this mixing is typically below 110°C. The duration of the mixing for each of the individual mixing steps is between 1 and 20 minutes.

Tire tread compound formulations for low silica controls and examples are listed in the table below as TT1 to TT10. Tread compound formulations for controls with no polymer additive are TT1 and TT10.

| Ingredient | TT1 | TT2 | TT3 | TT4 | TT5 | TT6 | TT7 | TT8 | TT9 | TT10 |
|---|---|---|---|---|---|---|---|---|---|---|
| SBR (1) | 81 | 81 | 81 | 81 | 81 | 81 | 81 | 81 | 81 | 81 |
| Silica (2) | 67 | 67 | 67 | 67 | 67 | 67 | 67 | 67 | 67 | 67 |
| BR (3) | 9 | 9 | 9 | 9 | 9 | 9 | 9 | 9 | 9 | 9 |
| NR (4) | 10 | 10 | 10 | 10 | 10 | 10 | 10 | 10 | 10 | 10 |
| Plasticizing oil (5) | 15 | 15 | 15 | 15 | 15 | 15 | 15 | 15 | 15 | 15 |
| Coupling agent (6) | 5.75 | 5.75 | 5.75 | 5.75 | 5.75 | 5.75 | 5.75 | 5.75 | 5.75 | 5.75 |
| Antioxidant (7) | 2 | 2 | 2 | 2 | 2 | 2 | 2 | 2 | 2 | 2 |
| Carbon black (8) | 5.75 | 5.75 | 5.75 | 5.75 | 5.75 | 5.75 | 5.75 | 5.75 | 5.75 | 5.75 |
| Stearic acid | 2.5 | 2.5 | 2.5 | 2.5 | 2.5 | 2.5 | 2.5 | 2.5 | 2.5 | 2.5 |
| **Ex. 16** | | 20 | | | | | | | | |
| **Ex. 17** | | | 20 | | | | | | | |
| **Ex. 18** | | | | 20 | | | | | | |
| **Ex. 19** | | | | | 20 | | | | | |
| **Ex. 21** | | | | | | 20 | | | | |
| **Ex. 20** | | | | | | | 20 | | | |
| **Ex. 22** | | | | | | | | 20 | | |
| **Ex. 23** | | | | | | | | | 20 | |
| **ZnO (9)** | **2** | 2 | 2 | 2 | 2 | 2 | 2 | 2 | 2 | 2 |
| **Accelerator 1 (10)** | **1.19** | 1.19 | 1.19 | 1.19 | 1.19 | 1.19 | 1.19 | 1.19 | 1.19 | 1.19 |
| **Sulfur** | **1.4** | 1.4 | 1.4 | 1.4 | 1.4 | 1.4 | 1.4 | 1.4 | 1.4 | 1.4 |
| **Accelerator 2 (11)** | **1.4** | 1.4 | 1.4 | 1.4 | 1.4 | 1.4 | 1.4 | 1.4 | 1.4 | 1.4 |
| **TOTAL PHR** | **203.9 9** | 223.9 9 | 223.9 9 | 223.9 9 | 223.9 9 | 223.9 9 | 223.9 9 | 223.9 9 | 223.9 9 | 203.9 9 |

| | | | | | | | | | | |
|---|---|---|---|---|---|---|---|---|---|---|
| (1) S-SBR with 21*%* bound styrene and 67*%* vinyl content (NIPOL^{®} NS 116R from Zeon Corp.) (2) Amorphous Silica (ZEOSIL^{®} 1165MP from Rhodia) (3) High-cis BR (BUDENE^{®} 1280 from Goodyear Chemical) (4) Natural rubber SVR 3 CV60 (Standard Vietnamese Rubber CV 60) (5) High viscosity naphthenic black oil (NYTEX^{®} 4700 from Nynas AB) (6) Silane coupling agent TESPT (Si69^{®} from Evonik Industries) (7) N-(1,3-Dimethylbutyl)-N'-phenyl-p-phenylenediamine (Santoflex^{®} 6-PPD from Flexsys) (8) Carbon black (Vulcan^{®}3 N330 from Cabot Corp.) (9) Zinc oxide in naphthenic oil (AKRO-ZINC^{®} BAR 85 from Akrochem Corp.) (10) N-cyclohexyl-2-benzothiazylsulfenamide (CBS from Kemai Chemical Co.) (11) Diphenyl guanidine (Ekaland DPG from MLPC International (Arkema) | | | | | | | | | | |

A second set of low silica tread compound formulations for controls and examples are listed below as TT11 to TT18. Tread compound formulations for controls with no polymer additive are TT11 and TT18.

### Tire Tread Formulations (TT11 to TT18)

| Ingredient | TT11 | TT12 | TT13 | TT14 | TT15 | TT16 | TT17 | TT18 |
|---|---|---|---|---|---|---|---|---|
| SBR (1) | 70 | 70 | 70 | 70 | 70 | 70 | 70 | 70 |
| Silica (2) | 67 | 67 | 67 | 67 | 67 | 67 | 67 | 67 |
| BR (3) | 20 | 20 | 20 | 20 | 20 | 20 | 20 | 20 |
| NR (4) | 10 | 10 | 10 | 10 | 10 | 10 | 10 | 10 |
| Resin (5) | 15 | 15 | 15 | 15 | 15 | 15 | 15 | 15 |
| Coupling agent (6) | 5.75 | 5.75 | 5.75 | 5.75 | 5.75 | 5.75 | 5.75 | 5.75 |
| Antioxidant (7) | 2 | 2 | 2 | 2 | 2 | 2 | 2 | 2 |
| Carbon black (8) | 5.75 | 5.75 | 5.75 | 5.75 | 5.75 | 5.75 | 5.75 | 5.75 |
| Stearic acid | 2.5 | 2.5 | 2.5 | 2.5 | 2.5 | 2.5 | 2.5 | 2.5 |
| **Ex. 12** | | 20 | | | | | | |
| **Ex. 13** | | | 20 | | | | | |
| **Ex. 14** | | | | 20 | | | | |
| **Ex. 15** | | | | | 20 | | | |
| **Ex. 25** | | | | | | 20 | | |
| **Ex. 24** | | | | | | | 20 | |
| ZnO (9) | 2 | 2 | 2 | 2 | 2 | 2 | 2 | 2 |
| Accelerator 1 (10) | 1.19 | 1.19 | 1.19 | 1.19 | 1.19 | 1.19 | 1.19 | 1.19 |
| Sulfur | 1.4 | 1.4 | 1.4 | 1.4 | 1.4 | 1.4 | 1.4 | 1.4 |
| Accelerator 2(11) | 1.4 | 1.4 | 1.4 | 1.4 | 1.4 | 1.4 | 1.4 | 1.4 |
| TOTAL PHR | 203.99 | 223.99 | 223.99 | 223.99 | 223.99 | 223.99 | 223.99 | 203.99 |

| | | | | | | | | |
|---|---|---|---|---|---|---|---|---|
| (1) S-SBR with 21*%* bound styrene and 67*%* vinyl content (NIPOL^{®} NS 116R from Zeon Corp.) (2) Amorphous Silica (ZEOSIL^{®} 1165MP from Rhodia) (3) High-cis BR (BUDENE^{®} 1280 from Goodyear Chemical) (4) Natural rubber SVR 3 CV60 (Standard Vietnamese Rubber CV 60) (5) Hydrocarbon resin (Oppera^{™} PR383 from ExxonMobil Chemical Co.) (6) Silane coupling agent TESPT (Si69^{®} from Evonik Industries) (7) N-(1,3-Dimethylbutyl)-N'-phenyl-p-phenylenediamine (Santoflex^{®} 6-PPD from Flexsys) (8) Carbon black (Vulcan^{®}3 N330 from Cabot Corp.) (9) Zinc oxide in naphthenic oil (AKRO-ZINC^{®} BAR 85 from Akrochem Corp.) (10) N-cyclohexyl-2-benzothiazylsulfenamide (CBS from Kemai Chemical Co.) (11) Diphenyl guanidine (Ekaland DPG from MLPC International (Arkema) | | | | | | | | |

### Loss Tangent Measurements

### Dynamic Mechanical Thermal Analysis (DMTA) test method.

All tread formulations were compression molded and cured into pads. Afterward, a rectangular test specimen (12 mm wide & 30 mm long) was died out of the cured pads and mounted in an ARES G2 (Advanced Rheometric Expansion System, TA instruments) for dynamic mechanical testing in torsion rectangular geometry. Though the thickness of the test specimen was around 1.8 mm, the thickness of the specimens varied and was measured manually for each test. A strain sweep at room temperature up to 5.5% strains and at 10 Hz was conducted first followed by a temperature sweep at 4% strain and 10 Hz from -26°C to 100°C at 2°C/min ramp rates. Storage and loss moduli were measured along with the loss tangent values. For better wet traction, it is preferred to have higher loss tangent values at a temperatures of 0°C. For better rolling resistance, the loss tangent is preferred to be lower at a temperature of 60°C. The temperature at which the maximum tan delta occurred was recorded as the glass transition temperature, Tg.

The tables below provide the loss tangent measurements and the normalized loss tangent measurements for the tire tread formulations TT1 to TT10 and TT11-18, respectively, using the polymers of Table 1. For the tables with the normalized loss tangent measurements the loss tangent measurements are provided as a percentage of the corresponding control tire tread formulation, controls TT1 and TT10 for TT2 to TT9 and controls TT11 and TT18 for TT12 to TT17, respectively.

### DMTA Test Results for low silica tire tread formulations TT1-TT10

| Tan(delta) | | | | | | | | | |
|---|---|---|---|---|---|---|---|---|---|
| Temperature (°C) | Controls (TT1 & TT10) avg. | TT2 | TT3 | TT4 | TT5 | TT6 | TT7 | TT8 | TT9 |
| 0 | 0.534 | 0.628 | 0.605 | 0.540 | 0.539 | 0.551 | 0.543 | 0.602 | 0.619 |
| 60 | 0.134 | 0.123 | 0.116 | 0.119 | 0.124 | 0.116 | 0.117 | 0.122 | 0.127 |

| Tan(delta)- Normalized to control samples | | | | | | | | | |
|---|---|---|---|---|---|---|---|---|---|
| Temperature (°C) | Controls (TT1 & TT10) avg. | TT2 | TT3 | TT4 | TT5 | TT6 | TT7 | TT8 | TT9 |
| 0 | 100 | 117.4 | 113.1 | 101.0 | 100.8 | 103.1 | 101.6 | 112.6 | 115.9 |
| 60 | 100 | 92.0 | 86.7 | 88.5 | 92.7 | 86.6 | 87.6 | 91.1 | 94.6 |

The addition of the polymer/additive formulation of Table 1 to the low silica tire tread formulations TT2 to TT9, as compared to the corresponding control, improved wet traction (increased loss tangent at 0°C) and improved roll resistance (decreased loss tangent at 60°C).

### DMTA Test Results for low silica tire tread formulations TT11 to TT18

| Tan(delta) | | | | | | | |
|---|---|---|---|---|---|---|---|
| Temperature (°C) | Controls (TT11 & TT18) avg. | TT12 | TT13 | TT14 | TT15 | TT16 | TT17 |
| 0 | 0.621 | 0.699 | 0.679 | 0.660 | 0.663 | 0.687 | 0.788 |
| 60 | 0.139 | 0.125 | 0.128 | 0.128 | 0.121 | 0.133 | 0.135 |

| Tan(delta)- Normalized to control samples | | | | | | | |
|---|---|---|---|---|---|---|---|
| Temperature (°C) | Controls (TT11 & TT18) avg. | TT12 | TT13 | TT14 | TT15 | TT16 | TT17 |
| 0 | 100 | 112.6 | 109.5 | 106.3 | 106.8 | 110.6 | 126.9 |
| 60 | 100 | 89.9 | 92.2 | 92.4 | 87.2 | 95.6 | 97.0 |

The addition of the polymer/additive formulation of Table 1 to the low silica tread formulations TT12 to TT17, as compared to the corresponding control, improved wet traction (increased loss tangent at 0°C) and improved roll resistance (decreased loss tangent at 60°C).

Peak Tan Delta temperature (°C) for tire tread formulations TT1 to TT10 and TT11 to TT18.

| Control TT1 | TT2 | TT3 | TT4 | TT5 | TT6 | TT7 | TT8 | TT9 | TT10 |
|---|---|---|---|---|---|---|---|---|---|
| -20 | -16 | -18 | -18 | -20 | -18 | -18 | -16 | -16 | -18 |

| Control TT11 | TT12 | TT13 | TT14 | TT15 | TT16 | TT17 | TT18 |
|---|---|---|---|---|---|---|---|
| -18 | -16 | -16 | -18 | -16 | -16 | -16 | -18 |

As shown above, the addition of the polymer/additive formulation of Table 1 in tire tread formulations TT2 to TT9 and TT12 to TT17 increased the Tg of the formulation slightly. It is expected that raising the compound glass transition temperature (Tg) would provide better wet traction but, at the same time, increase the rolling resistance and tread wear. Thus, it is expected that that raising the compound glass transition temperature (Tg) would provide better wet traction and increased rolling resistance and tread wear. However, as seen from the addition of the polymer additive in tire tread formulations TT2 to TT9 and TT12 to TT17, the slight increase in the Tg of the formulation still led to improved results in the form of increased wet traction, decreased roll resistance and decreased tread wear.

In the specification and in the claims, the terms "including" and "comprising" are open-ended terms and should be interpreted to mean "including, but not limited to". These terms encompass the more restrictive terms "consisting essentially of" and "consisting of."

It must be noted that as used herein and in the appended claims, the singular forms "a", "an", and "the" include plural reference unless the context clearly dictates otherwise. As well, the terms "a" (or "an"), "one or more" and "at least one" can be used interchangeably herein. It is also to be noted that the terms "comprising", "including", "characterized by" and "having" can be used interchangeably.

## Claims

1. An elastomeric composition comprising, per 100 parts by weight of rubber (phr):
5 to 30 phr of polybutadiene having a cis- 1,4 linkage content of at least 95%;
65 to 90 phr of a styrene/butadiene copolymer;
a curative agent;
an antioxidant;
5 to 30 phr carbon black;
50 to 80 phr silica;
a silane coupling agent;
and 5 to 30 phr of a polymer, wherein the polymer is selected from the group consisting of ethylene-propylene-diene terpolymer, butyl rubber, poly(isobutylene-co-para-methylstyrene) and poly(isobutylene-co-para-methylstyrene-co-isoprene) terpolymer;
wherein the polymer is functionalized with an epoxy, thioacetate, mercaptobenzothiazole, amine ionomer, phosphine ionomer or citranellol functional group.

2. The elastomeric composition of any preceding claim, wherein the polymer is functionalized with sulfur.

3. The elastomeric composition of any preceding claim wherein the ethylene-propylene-diene terpolymer is epoxidized ethylene-propylene-diene terpolymer.

4. The elastomeric composition of any preceding claim wherein the butyl rubber is epoxidized butyl rubber.

5. The elastomeric composition of any preceding claim, wherein the ethylene-propylene-diene terpolymer contains from 0.5 to 10 wt% ethylidene norbomene based on the terpolymer.

6. The elastomeric composition of any preceding claim, wherein the ethylene-propylene-diene terpolymer contains from 65 to 95 wt% propylene based on the terpolymer.

7. The elastomeric composition of any preceding claim, wherein the poly(isobutylene-co-para-methylstyrene-co-isoprene) terpolymer contains from 4-8 mol% p-methylstyrene, 0.2-2 mol% isoprene and 90-95 mol% isobutylene based on the terpolymer.

8. The elastomeric composition of any preceding claim, wherein the polymer is halogenated.

9. The elastomeric composition of any preceding claim, wherein the silane coupling agent is selected from the group consisting of bis(3-triethoxysilylpropyl)tetrasulphide, bis(triethoxysilylpropyl)disulphide and bis(triethoxysilylpropyl) tetrasulphide.

10. The elastomeric composition of any preceding claim, further comprising 1 to 25 phr hydrocarbon resin.

11. The elastomeric composition of any preceding claim, further comprising 1 to 20 phr natural rubber or polyisoprene.

12. The elastomeric composition of any preceding claim, further comprising 1 to 25 phr processing oil.

13. The elastomeric composition of any preceding claim, wherein the glass transition temperature (Tg) is from 20°C to -60°C.

14. A tire tread composition comprising the elastomeric composition of any preceding claim, wherein the tire tread is preferably a tread for a summer tire.

15. Use of a tire tread composition according to claim 14 in a summer tire.

## Patentansprüche

1. Elastomerzusammensetzung, die auf 100 Gewichtsteile Kautschuk (phr)
5 bis 30 phr Polybutadien mit einem Gehalt an cis-1,4-Verknüpfung von mindestens 95 %,
65 bis 90 phr Styrol/Butadien-Copolymer,
Härtungsmittel,
Antioxidans,
5 bis 30 phr Ruß,
50 bis 80 phr Siliciumdioxid,
Silankopplungsmittel
und 5 bis 30 phr Polymer umfasst, wobei das Polymer ausgewählt ist aus der Gruppe bestehend aus Ethylen-Propylen-Dien-Terpolymer, Butylkautschuk, Poly(isobutylen-co-para-methylstyrol) und Poly(isobutylen-co-para-methylstyrol-co-isopren)-Terpolymer,
wobei das Polymer mit funktioneller Epoxy-, Thioacetat-, Mercaptobenzothiazol-, Aminionomer-, Phosphinionomer- oder Citranellolgruppe funktionalisiert ist.

2. Elastomerzusammensetzung nach einem der vorhergehenden Ansprüche, bei der das Polymer mit Schwefel funktionalisiert ist.

3. Elastomerzusammensetzung nach einem der vorhergehenden Ansprüche, bei der das Ethylen-Propylen-Dien-Terpolymer epoxidiertes Ethylen-Propylen-Dien-Terpolymer ist.

4. Elastomerzusammensetzung nach einem der vorhergehenden Ansprüche, bei der der Butylkautschuk epoxidierter Butylkautschuk ist.

5. Elastomerzusammensetzung nach einem der vorhergehenden Ansprüche, bei der das Ethylen-Propylen-Dien-Terpolymer 0,5 bis 10 Gew. % Ethylidennorbornen enthält, bezogen auf das Terpolymer.

6. Elastomerzusammensetzung nach einem der vorhergehenden Ansprüche, bei der das Ethylen-Propylen-Dien-Terpolymer 65 bis 95 Gew.% Propylen enthält, bezogen auf das Terpolymer.

7. Elastomerzusammensetzung nach einem der vorhergehenden Ansprüche, bei der das Poly(isobutylen-co-para-methylstyrol-co-isopren)-Terpolymer 4 bis 8 Mol% p-Methylstyrol, 0,2 bis 2 Mol% Isopren und 90 bis 95 Mol% Isobutylen enthält, bezogen auf das Terpolymer.

8. Elastomerzusammensetzung nach einem der vorhergehenden Ansprüche, bei der das Polymer halogeniert ist.

9. Elastomerzusammensetzung nach einem der vorhergehenden Ansprüche, bei der das Silankopplungsmittel ausgewählt ist aus der Gruppe bestehend aus Bis(3-triethoxysilylpropyl)tetrasulfid, Bis(triethoxysilylpropyl)disulfid und Bis(triethoxysilylpropyl)tetrasulfid.

10. Elastomerzusammensetzung nach einem der vorhergehenden Ansprüche, die des Weiteren 1 bis 25 phr Kohlenwasserstoffharz umfasst.

11. Elastomerzusammensetzung nach einem der vorhergehenden Ansprüche, die des Weiteren 1 bis 20 phr Naturkautschuk oder Polyisopren umfasst.

12. Elastomerzusammensetzung nach einem der vorhergehenden Ansprüche, die des Weiteren 1 bis 25 phr Prozessöl umfasst.

13. Elastomerzusammensetzung nach einem der vorhergehenden Ansprüche, bei der die Glasübergangstemperatur (Tg) 20 °C bis -60°C beträgt.

14. Reifenlaufflächenzusammensetzung, die die Elastomerzusammensetzung gemäß einem der vorhergehenden Ansprüche umfasst, wobei die Reifenlauffläche vorzugsweise eine Lauffläche für einen Sommerreifen ist.

15. Verwendung einer Reifenlaufflächenzusammensetzung gemäß Anspruch 14 in einem Sommerreifen.

## Revendications

1. Composition élastomérique comprenant, par 100 parties en poids de caoutchouc (phr) :
5 à 30 phr de polybutadiène ayant une teneur en liaisons cis-1,4 d'au moins 95 % ;
65 à 90 phr d'un copolymère de styrène/butadiène ;
un agent de durcissement ;
un antioxydant ;
5 à 30 phr de noir de carbone ;
50 à 80 phr de silice ;
un agent de couplage de type silane ;
et 5 à 30 phr d'un polymère, le polymère étant choisi dans le groupe constitué par un terpolymère d'éthylène-propylène-diène, un caoutchouc de butyle, un poly(isobutylène-co-para-méthylstyrène) et un terpolymère de type poly(isobutylène-co-para-méthylstyrène-co-isoprène) ;
le polymère étant fonctionnalisé par un groupe fonctionnel époxy, thioacétate, mercaptobenzothiazole, ionomère d'amine, ionomère de phosphine ou citranellol.

2. Composition élastomérique selon une quelconque revendication précédente, le polymère étant fonctionnalisé par du soufre.

3. Composition élastomérique selon une quelconque revendication précédente, le terpolymère d'éthylène-propylène-diène étant un terpolymère d'éthylène-propylène-diène époxydé.

4. Composition élastomérique selon une quelconque revendication précédente, le caoutchouc de butyle étant un caoutchouc de butyle époxydé.

5. Composition élastomérique selon une quelconque revendication précédente, le terpolymère d'éthylène-propylène-diène contenant de 0,5 à 10 % en poids d'éthylidène norbornène sur la base du terpolymère.

6. Composition élastomérique selon une quelconque revendication précédente, le terpolymère d'éthylène-propylène-diène contenant de 65 à 95 % en poids de propylène sur la base du terpolymère.

7. Composition élastomérique selon une quelconque revendication précédente, le terpolymère de type poly(isobutylène-co-para-méthylstyrène-co-isoprène) contenant de 4 à 8 % en moles de p-méthylstyrène, 0,2 à 2 % en moles d'isoprène et 90 à 95 % en moles d'isobutylène sur la base du terpolymère.

8. Composition élastomérique selon une quelconque revendication précédente, le polymère étant halogéné.

9. Composition élastomérique selon une quelconque revendication précédente, l'agent de couplage de type silane étant choisi dans le groupe constitué par bis(3-triéthoxysilylpropyl)tétrasulfure, bis(triéthoxysilylpropyl)disulfure et bis(triéthoxysilylpropyl)tétrasulfure.

10. Composition élastomérique selon une quelconque revendication précédente, comprenant en outre 1 à 25 phr d'une résine d'hydrocarbure.

11. Composition élastomérique selon une quelconque revendication précédente, comprenant en outre 1 à 20 phr d'un caoutchouc naturel ou d'un polyisoprène.

12. Composition élastomérique selon une quelconque revendication précédente, comprenant en outre 1 à 25 phr d'une huile de traitement.

13. Composition élastomérique selon une quelconque revendication précédente, la température de transition vitreuse (Tg) étant de 20 °C à -60 °C.

14. Composition de bande de roulement de pneu comprenant la composition élastomérique selon une quelconque revendication précédente, la bande de roulement de pneu étant préférablement une bande de roulement pour un pneu d'été.

15. Utilisation d'une composition de bande de roulement de pneu selon la revendication 14 dans un pneu d'été.
